Europäisches Patentamt

European Patent Office

Office européen des brevets

(19)

(11) Numéro de publication : **0 057 628**
**B1**

# (12) FASCICULE DE BREVET EUROPÉEN

(45) Date de publication du fascicule du brevet :
**11.04.84**

(21) Numéro de dépôt : **82400114.3**

(22) Date de dépôt : **21.01.82**

(51) Int. Cl.³ : **H 04 Q 11/04, H 04 M 11/06**

(54) **Système de commutation numérique à division du temps de canaux en mode-circuit et en mode-paquet.**

(30) Priorité : **23.01.81 FR 8101327**

(43) Date de publication de la demande :
**11.08.82 Bulletin 82/32**

(45) Mention de la délivrance du brevet :
**11.04.84 Bulletin 84/15**

(84) Etats contractants désignés :
**DE GB NL SE**

(56) Documents cités :
**EP-A- 0 034 514**
**FR-A- 2 412 994**

(73) Titulaire : **Dauphin, Jean-Louis**
**70, Résidence Corlay**
**F-22300 Lannion (FR)**

**Louvet, Olivier**
**22, Avenue de Normandie, Keruhel**
**F-22300 Lannion (FR)**

**Slawy, Serge**
**Kergavant**
**F-22300 Lannion (FR)**

(72) Inventeur : **Dauphin, Jean-Louis**
**70, Résidence Corlay**
**F-22300 Lannion (FR)**
Inventeur : **Louvet, Olivier**
**22, Avenue de Normandie, Keruhel**
**F-22300 Lannion (FR)**
Inventeur : **Slawy, Serge**
**Kergavant**
**F-22300 Lannion (FR)**

(74) Mandataire : **Cabinet Martinet**
**62, rue des Mathurins**
**F-75008 Paris (FR)**

**0 057 628**

Système de commutation numérique à division du temps de canaux en mode-circuit
et en mode-paquet

La présente invention concerne un système de commutation numérique à division du temps de canaux à débit prédéterminé en mode-circuit et en mode-paquet convoyant des mots d'information utile à nombre prédéterminé de bits, comprenant G premiers moyens pour multiplexer chacun un groupe de I canaux de réception en un multiplex sortant, G premiers moyens pour démultiplexer chacun un multiplex entrant en un groupe de I canaux d'émission, chaque multiplex ayant une trame récurrente comprenant I mots d'information utile assignés auxdits canaux multiplexés, et des moyens pour commuter bidirectionnellement les canaux en mode-circuit et les canaux en mode-paquet entre les multiplex entrants et sortants.

Un tel système, appelé également système de commutation multiservice, est décrit dans la EP-A-0.034.514 publiée le 26.08.1981. Les canaux de réception sont délivrés par des lignes d'abonné à un canal en mode-circuit pour la parole et un canal en mode-paquet pour des données et par des lignes monocanales en mode-circuit ou en mode-paquet à travers des équipements individuels.

Un équipement individuel d'une ligne d'abonné comprend des seconds moyens de multiplexage pour démultiplexer les canaux. Un équipement individuel d'une ligne d'abonné ou d'une ligne monocanale en mode-paquet comprend un détecteur de transition fanion/paquet dans le canal en mode-paquet. Ce détecteur transmet l'adresse du canal à l'unité de marquage des moyens ou réseau de commutation du système multiservice en réponse à la détection d'une telle transition, à travers une liaison spécialisée. De même, lorsque le commutateur de paquets associé au système multiservice doit transmettre un paquet, il envoie l'adresse de la ligne monocanale libre en mode-paquet sélectionnée à l'unité de marquage, à travers une liaison spécialisée.

Une telle organisation du système nécessite, d'une part, que les équipements individuels doivent être à proximité du réseau de commutation et, d'autre part, un câblage fastidieux et difficilement accessible à l'intérieur du réseau de commutation par des liaisons spécialisées lorsque l'on désire raccorder un nouvel équipement individuel en mode-paquet.

En outre, le système multiservice précédent ne permet pas de raccorder des lignes d'abonné ayant plus de deux canaux multiplexés. De telles lignes sont déjà connues, par exemple, par la FR-A-2.412.994 qui a trait à un système multiservice à réseau de commutation en mode-paquet et à réseau de commutation en mode-circuit séparés. De telles lignes permettant de transmettre simultanément plusieurs canaux de parole et plusieurs canaux de paquets sont actuellement exigées par les besoins croissants des abonnés télématiques.

La présente invention poursuit un double but. Un premier est de transmettre directement dans les multiplex sortant et entrant interconnectés au réseau de commutation du système multiservice, les indications de transition fanion/paquet afin d'éviter l'introduction de liaisons spécialisées. Un second but est de banaliser l'interface au niveau des canaux, après leur démultiplexage à partir des lignes, afin de relier aux premiers moyens de multiplexage et de démultiplexage n'importe quel terminal de transmission de données, que ce soit pour une ligne en mode duplex ou semi-duplex et/ou monocanale ou multicanale.

A ces fins, un système de commutation numérique à division du temps du genre défini dans l'entrée en matière est caractérisé en ce que chacun des premiers moyens de multiplexage comprend des moyens pour introduire dans des intervalles de temps prédéterminés de I trames consécutives du multiplex sortant (MUXS) définissant une multitrame, des mots d'information d'exploitation (IE) ayant le nombre prédéterminé de bits respectivement assignés auxdits I canaux de réception, les multiplex entrants convoyant de telles trames et multitrames, et des moyens de détection des transitions fanion/paquet dans les canaux de réception en mode-paquet pour remplacer le mot d'information d'exploitation par un mot d'indication de transition dans une trame de multiplex sortant ayant le même rang dans la multitrame que celui du canal de réception en mode-paquet dans lequel une transition a été détectée et en ce que les moyens de commutation comprennent des moyens recevant les mots d'information d'exploitation multiplexés dans les multitrames des multiplex sortants pour détecter le mot d'indication de transition afin de commuter le canal à transition détectée avec un canal en mode-paquet libre d'un multiplex entrant.

Ainsi, le fait qu'un intervalle de temps dans chaque trame des multiplex entrants et sortants est assigné à un mot d'information d'exploitation d'un canal, permet de transmettre au réseau de commutation, sans l'intermédiaire de liaisons spécialisées, non seulement un mot d'indication de transition fanion/paquet et l'adresse du canal en mode-paquet, mais aussi un mot indiquant le type de mode-circuit ou paquet du canal. Ceci rend possible l'affectation dynamique des canaux gérés dans chaque régie d'abonné et le déport à distance des premiers moyens de multiplexage et de démultiplexage relativement au réseau de commutation.

Ce déport est nécessaire lorsque, par exemple, plusieurs abonnés télématiques sont groupés en un même endroit. Dans ce cas, les premiers moyens de multiplexage et de démultiplexage de chaque groupe comprennent des moyens pour introduire un mot de verrouillage dans chaque trame du multiplex sortant et des moyens pour détecter dans chaque trame du multiplex entrant un mot de verrouillage afin de synchroniser localement la base de temps des premiers moyens de multiplexage et de démultiplexage

2

avec celle des moyens de commutation. Chaque trame des multiplex entrants et sortants comprend alors un mot de verrouillage, un mot d'information d'exploitation et I mots d'information utile.

Pour rendre possible l'affectation dynamique des canaux, l'invention prévoit que, dans chaque canal de ligne, sont convoyés, outre un mot d'information utile, tel qu'un ou deux octets paquetisés, un mot d'adresse du canal et au moins un bit d'un mot d'information d'exploitation. Ce mot d'information d'exploitation signale outre l'indication du mode et de l'origine d'émission du canal, telle que régie d'abonné, interface d'adaptation aux réseaux extérieurs, commutateur de paquet, également des alarmes produites par une régie d'abonné ou des positionnements destinés à la régie en cas de défaillance détectée par le réseau de commutation.

Les informations d'exploitation constituent dans une ligne un canal secondaire à bas débit, typiquement de 4 kbit/s pour un débit d'informations utiles de 64 kbit/s. Les seconds moyens de multiplexage et de démultiplexage interconnectés entre la ligne et l'interface des canaux, en tant qu'équipement terminal de transmission, permettent d'adapter au mieux les besoins instantanés en débit des équipements périphériques d'une régie selon le degré d'activité de ces derniers, que ce soit pour transmettre des données ou des échantillons de parole. Selon une caractéristique de l'invention, les seconds moyens de multiplexage et de démultiplexage comprennent pour chaque ligne, à la réception, des moyens pour détecter les mots d'adresse des canaux, des moyens pour démultiplexer les mots d'information utile et des bits d'informations d'exploitation à leurs débits respectifs pour chaque canal et des moyens pour multiplexer les informations utiles et les informations d'exploitation en un canal de réception de la ligne dans lequel les mots d'informations utiles et d'exploitation sont multiplexés bit à bit et, à l'émission, des moyens pour démultiplexer chaque canal d'émission de la ligne en les mots d'information utile et les bits d'information d'exploitation à leurs débits respectifs, des moyens pour multiplexer les informations utiles et les bits d'information d'exploitation à leurs débits respectifs de tous les canaux en les canaux de la ligne et des moyens pour insérer à la sortie des derniers moyens de multiplexage les mots d'adresse dans les canaux multiplexés.

Ainsi, les premiers moyens de multiplexage et de démultiplexagè sont standards pour chaque groupe et leurs interfaces de canaux, côté lignes, sont banalisées. En fonction du type de transmission duplex ou semi-duplex ou du nombre de canaux de la ligne, un équipement terminal est enfiché dans le module d'ensemble relatif à un groupe de I canaux. Les équipements terminaux sont enfichables et interchangeables dans ce module, ce qui facilite toutes modifications du type de la ligne en fonction des besoins de l'abonné.

D'autres avantages de la présente invention apparaîtront plus clairement à la lecture de la description qui suit de plusieurs réalisations préférées en référence aux dessins annexés correspondants dans lesquels :

la Figure 1 est un bloc-diagramme du système de commutation numérique multiservice selon la EP-A-0.034.514 ;

la Figure 2 est un bloc-diagramme du système de commutation numérique multiservice selon l'invention ;

la Figure 3 est un chronogramme de trames dans des lignes numériques à un et plusieurs canaux ;

la Figure 4 est un bloc-diagramme d'un module de raccordement à I canaux de liaison ;

la Figure 5 est un bloc-diagramme d'un équipement terminal de transmission d'un module de raccordement pour ligne à K canaux en mode duplex ou semi-duplex, appelé ci-dessus seconds moyens de multiplexage et de démultiplexage ;

la Figure 6 est un chronogramme d'une trame d'un canal de liaison de l'interface banalisée de module de raccordement ;

la Figure 7 est un tableau récapitulatif des différents mots d'information d'exploitation ;

la Figure 8 montre la configuration des multitrames des multiplex sortants et entrants relatives à des modules de raccordements proches et déportés du réseau de commutation ;

la Figure 9 est un organe de raccordement standard d'un module de raccordement, appelé ci-dessus premiers moyens de multiplexage et de démultiplexage ;

la Figure 10 est un bloc-diagramme du circuit de mémorisation d'information utile ou d'exploitation de la partie réception d'un organe de raccordement ;

la Figure 11 est un bloc-diagramme du circuit de détection d'un organe de raccordement ;

la Figure 12 est un bloc-diagramme simplifié montrant le processus de détection des transitions dans le circuit de la Fig. 11 ;

la Figure 13 est un bloc-diagramme du circuit de mémorisation d'information utile ou d'exploitation de la partie émission d'un organe de raccordement ;

la Figure 14 est un bloc-diagramme du circuit de détection de mode de canal dans la partie d'émission d'un organe de raccordement ; et

la Figure 15 est un bloc-diagramme de la partie de l'unité de marquage associée au réseau de commutation du système multiservice selon l'invention, ayant trait à la commutation des canaux en mode-paquet.

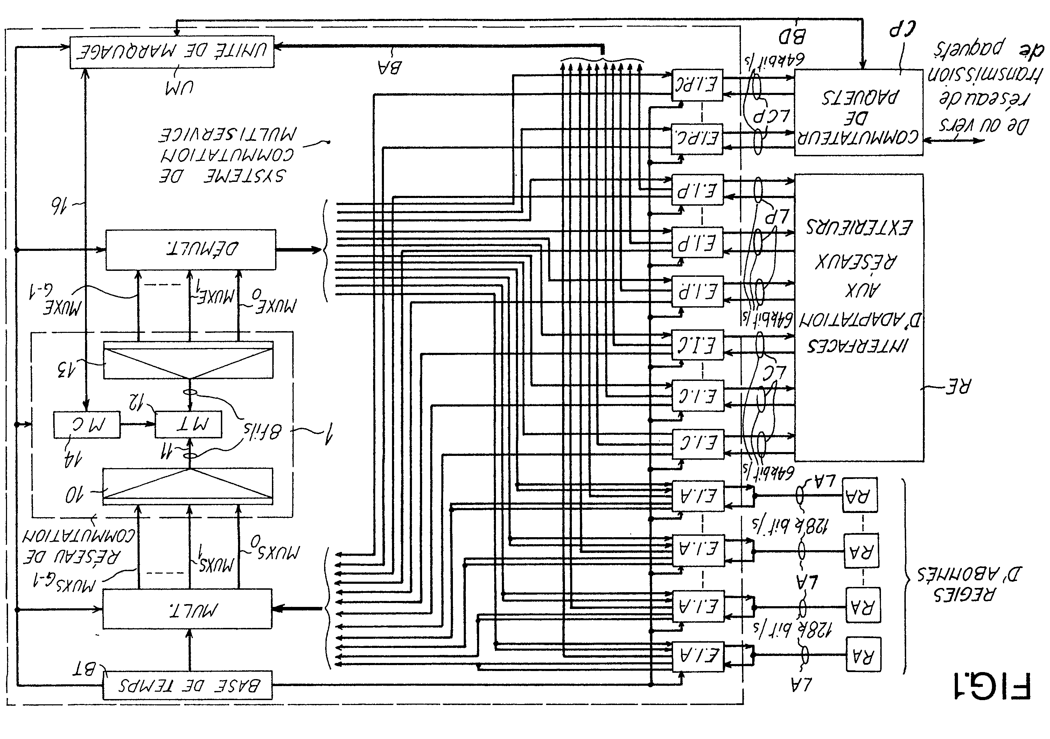

On se réfère d'abord à la Fig. 1 qui montre schématiquement le système de commutation numérique à division du temps multiservice selon la EP-A-0.034.514 avec son environnement.

Ce système offre simultanément à chaque abonné télématique une pluralité de services. Ceux-ci sont

# 0 057 628

sélectionnés au moyen de terminaux mis à la disposition de l'abonné dans une régie RA. Ces terminaux sont, outre un poste téléphonique numérique, une imprimante et/ou une console de visualisation à clavier, un télécopieur ou un visiophone. Chaque régie d'abonné RA est desservie par une ligne d'abonné bidirectionnelle à quatre fils LA, au débit global de 128 kbit/s, qui convoie deux canaux multiplexés à 64 kbit/s ayant des fentes temporelles constantes d'un octet. Le premier canal est en mode-circuit et transmet les échantillons à 8 bits en code MIC relatif à l'échange de parole avec le poste téléphonique. Le second canal est en mode-paquet et transite des paquets de données à débits sous-multiples de 64 kbit/s, par exemple 300, 1 200 et 9 600 bit/s, qui sont multiplexés statistiquement. Les informations utiles des canaux sont commutées bidirectionnellement dans le réseau de commutation 1 du système multiservice en fonction de leur destination. Pour de la parole ou informations en mode-circuit, l'information utile transmise par le premier canal d'une ligne d'abonné LA est retransmise soit dans le premier canal d'une ligne d'abonné locale LA soit sur l'une des lignes numériques en mode-circuit à 64 kbit/s LC reliée au réseau téléphonique numérique ou analogique extérieur. Pour des données en mode-paquet, l'information utile d'un second canal d'une ligne d'abonné est retransmise à travers une ligne numérique libre en mode-paquet LCP à 64 kbit/s, vers un commutateur de paquets CP. Ce dernier dirige les paquets reçus soit directement vers le réseau de transmission de paquets auquel il est associé, soit à travers une ligne LCP libre et le réseau de commutation 1, vers le second canal d'une ligne d'abonné LA ou vers une ligne numérique en mode-paquet LP à 64 kbit/s qui est reliée à un réseau de transmission externe, tel que le télex. Dans la Fig. 1, on a désigné par RE les interfaces permettant l'adaptation des transmissions en mode-circuit sur les lignes LC et en mode-paquet sur les lignes LP aux réseaux extérieurs téléphoniques et de paquets.

Selon la demande de brevet précitée, chaque ligne numérique LA, LC, LP, LCP est reliée au réseau de commutation 1 à travers un équipement individuel EIA, EIC, EIP, EIPC et un multiplexeur-démultiplexeur MULT-DEMULT. Un équipement individuel d'abonné EIA démultiplexe les deux canaux provenant de la régie associée RA. Le multiplexeur MULT multiplexe les canaux et lignes à 64 kbit/s sortant des équipements individuels en des voies numériques à débits supérieurs MUXS. Par exemple, le multiplexeur MULT multiplexe G groupes qui comprennent chacun 32 voies à 64 kbit/s, en G voies parallèles à 2 048 kbit/s $MUXS_0$ à $MUXS_{G-1}$. Puis dans le réseau de commutation 1, un multiplexeur d'entrée 10 effectue un multiplexage et une conversion série-parallèle afin de transmettre sur un supermultiplex entrant 11 les 8 bits parallèles de chaque octet, à raison de $G \times 32$ octets par trame récurrente d'une durée égale à 125 µs. Après commutation bidirectionnelle dans une mémoire tampon 12, les octets sont démultiplexés dans un démultiplexeur 13 en G voies à 2 048 kbit/s $MUXE_0$ à $MUXE_{G-1}$, puis dans un démultiplexeur DEMULT en $G \times 32$ voies à 64 kbit/s entrantes dans les équipements individuels EI. Un équipement individuel d'abonné EIA multiplexe les deux canaux associés en mode-paquet et en mode-circuit délivrés par le démultiplexeur DEMULT en la ligne d'abonné à 128 kbit/s LA correspondante.

Tous les équipements individuels EI assurent la mise en forme bidirectionnelle, notamment le transcodage, entre les signaux en code de ligne et les signaux binaires traités dans le réseau de commutation 1. Les équipements individuels EIA ou EIC sont transparents aux informations en mode-circuit provenant d'une régie d'abonné RA ou des interfaces d'adaptation aux réseaux extérieurs RE. Les équipements individuels EIA, EIP, EIPC sont transparents aux informations en mode-paquet provenant d'une régie d'abonné RA, des interfaces RE ou du commutateur de paquets CP. Chaque équipement EIA, EIP, EIPC détecte la transition présence de fanion/absence de fanion. Un fanion est un octet ayant la configuration binaire constante 0 1 1 1 1 1 1 0. Cette transition indique le début d'une trame d'un message de données en mode-paquet provenant d'une régie d'abonné ou de réseaux extérieurs. Tous les octets en mode-circuit ou en mode-paquet sont donc multiplexés et commutés dans le réseau de commutation 1, indifféremment de la nature de leurs informations utiles.

Le réseau de commutation 1 comprend, outre le multiplexeur d'entrée 10, le démultiplexeur de sortie 13 et la mémoire tampon 12 entre ces derniers, une mémoire de commande 14 à dispositif d'écriture et de lecture. Le réseau de commutation 1 est de préférence conforme à celui décrit dans la FR-A-2.458.198.

La mémoire tampon a une capacité de $(G \times 32)/2$ cellules de 8 bits et établit des communications bidirectionnelles. Chaque cellule de la mémoire tampon est lue et écrite simultanément par adressage de la mémoire de commande 14. Ainsi, pour deux voies à commuter à 64 kbit/s, le mot inscrit dans la cellule affectée à cette commutation dans la mémoire tampon et en provenance de la première voie à commuter est lu et le mot délivré par la seconde voie est écrit dans cette cellule au cours de l'intervalle temporel assigné à la seconde voie. Réciproquement, au cours de l'intervalle temporel assigné à la première voie à commuter, le mot inscrit dans la cellule considérée de la mémoire tampon et en provenance de la seconde voie à commuter est lu et le mot délivré par la première voie est écrit dans cette cellule.

La mémoire de commande 14 valide et reçoit les ordres de commutation en provenance de l'unité de marquage UM du système multiservice, à raison d'un ordre pendant $125/(G \times 32)$µs, à travers un bus bidirectionnel 16.

Outre la commutation classique des voies en mode-circuit, l'unité de marquage UM assure la commutation des voies en mode-paquet et, notamment, la sélection d'une ligne libre LCP reliée au commutateur de paquets PC en réponse à la détection d'une transition fanion/paquet sur une ligne entrante LA ou LP. On rappelle que le nombre de lignes LCP desservant le commutateur de paquets est

4

nettement inférieur à la somme des lignes LA et LP. A cette fin, un équipement individuel EIA ou EIP transmet l'adresse du canal ou de la ligne entrante correspondant LA ou LP sur lequel a été détectée une transition, à l'unité de marquage UM, via un bus d'adressage BA. Ceci signale à l'unité de marquage le début d'une trame en mode-paquet préalablement à l'entrée du premier mot de la trame en mode-paquet dans la mémoire tampon 12, condition assurée par un retard d'au moins deux octets dans l'équipement individuel EIA ou EIP. L'unité de marquage UM reçoit ainsi l'adresse du canal ou de la ligne entrant. L'unité de marquage recherche dans une mémoire d'occupation interne si une ligne sortante LCP est libre. Cette mémoire d'occupation interne est une image de la mémoire tampon. Si la réponse est affirmative, l'unité de marquage transmet à la mémoire de commande 14 les adresses de la ligne LA ou LP et de la ligne libre LCP, via le bus 16 afin que la mémoire de commande 14 fournisse l'adresse de cette commutation bidirectionnelle à la mémoire tampon 12. En fin d'échange, sans discontinuité de paquets, le commutateur de paquets PC émet une trame dite de réponse vers l'équipement individuel correspondant EIA ou EIP et ordonne la déconnexion des lignes précédentes LA et LCP ou LP et LCP dans l'unité de marquage, via le bus BD. Cette déconnexion est réalisée par l'effacement des adresses de commutation dans la mémoire tampon 12 et dans la mémoire d'occupation de l'unité de marquage.

Puis le commutateur de paquets CP peut par exemple retransmettre la trame en mode-paquet qu'il a reçue vers une ligne d'abonné LA ou vers une ligne LP reliée aux interfaces RE, en envoyant au préalable un ordre de connexion d'une ligne libre LCP avec une ligne LA ou LP vers l'unité de marquage UM à travers le bus BD. Cette unité de marquage commandera une telle connexion dans le réseau de commutation 1. Relativement à cette dernière procédure de commutation ainsi qu'à d'autres, on se reportera pour de plus amples détails à la EP-A-0.034.514. Celle-ci rappelle également certaines caractéristiques et définitions de la transmission en mode-paquet selon la procédure HDLC, dite de commande à chaînon à haut niveau, entre deux équipements terminaux qui sont, par exemple, inclus dans une régie d'abonné et dans le commutateur de paquets. Ces définitions et caractéristiques sont détaillées dans l'avis X.25 du Comité Consultatif International Télégraphique et Téléphonique (C.C.I.T.T.), tome VIII.2, Genève, 1976.

On notera que le système multiservice selon l'art antérieur montré à la Fig. 1 contient une base de temps générale BT qui délivre tous les signaux d'horloge nécessaires aussi bien à la commutation dans le réseau 1 qu'à la synchronisation des octets reçus et transmis dans les équipements individuels EI. Ces équipements EI sont à proximité immédiate du réseau de commutation.

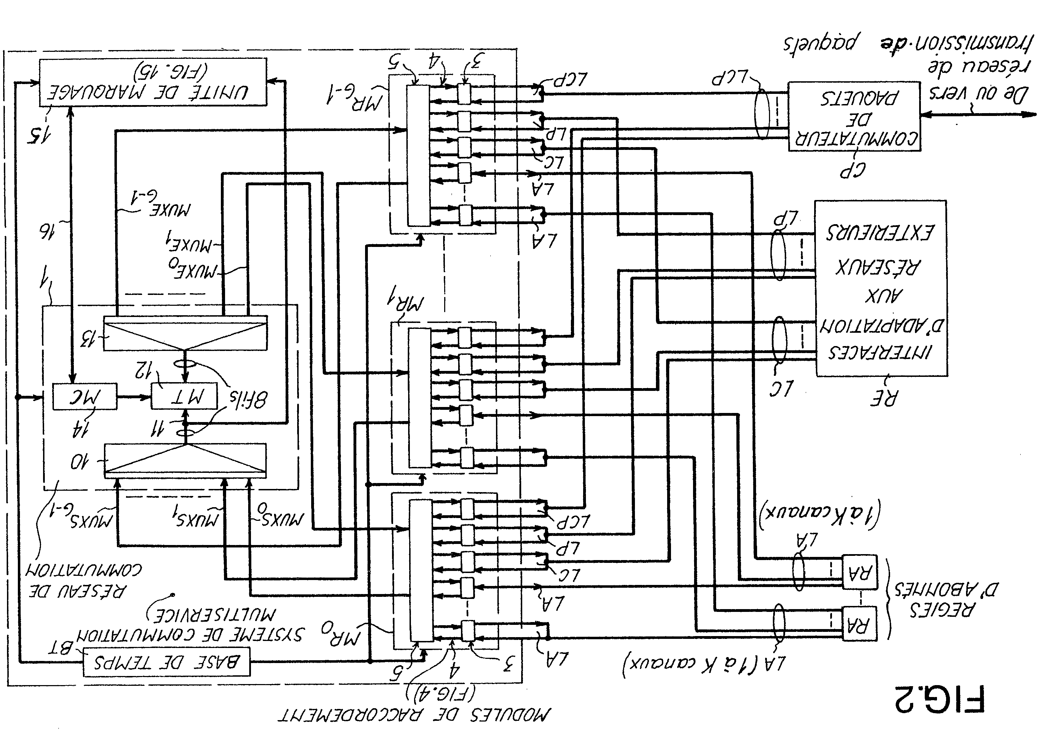

La Fig. 2 montre schématiquement le bloc-diagramme du système de commutation multiservice conforme à l'invention. Comparativement à la Fig. 1, on y retrouve le réseau de commutation 1 associé à une unité de marquage modifiée 15 et les différentes lignes LA, LC, LP et LCP. On constate que l'ensemble des équipements individuels EIA, EIC, EIP et EICP, du multiplexeur MULT et du démultiplexeur DEMULT est remplacé par un groupe de G modules de raccordement $MR_0$ à $MR_{G-1}$.

Chaque module de raccordement, objet principal de l'invention, assure d'une manière générale les fonctions d'un ensemble d'équipements EIA, et/ou EIC, et/ou EIP, et/ou EIPC et d'un étage de multiplexage et de démultiplexage des multiplexeur MULT et démultiplexeur DEMULT. Cependant, contrairement à l'art antérieur précédemment décrit, le système multiservice selon l'invention permet de relier des régies d'abonné de différents types. Ces types sont déterminés en fonction du nombre de canaux multiplexés sur chaque ligne d'abonné et des modes des canaux. Ainsi, une ligne d'abonné dans la Fig. 2 peut convoyer bidirectionnellement un nombre entier K de canaux à 64 kbit/s, les uns en mode-circuit et les autres en mode-paquet. L'affectation du mode à un canal peut être déterminée préalablement ou dynamiquement dans la régie. En général, un module de raccordement multiplexe au plus trente et un canaux à 64 kbit/s sur un multiplex MUXS à 2 048 kbit/s dans le réseau de commutation. Les informations assignées à chacun de ces canaux peuvent provenir indifféremment de n'importe quelle ligne LA, LC, LP, LCP. On se référera dans la suite, sauf indication contraire en fin de description, à un module de raccordement desservant des lignes d'abonné LA de préférence à deux, resp. K canaux en mode-circuit et/ou en mode-paquet au débit de 128, resp. $k \times 64$ kbit/s, des lignes en mode circuit LC à 64 kbit/s et des lignes en mode-paquet LP et LCP à 64 kbit/s.

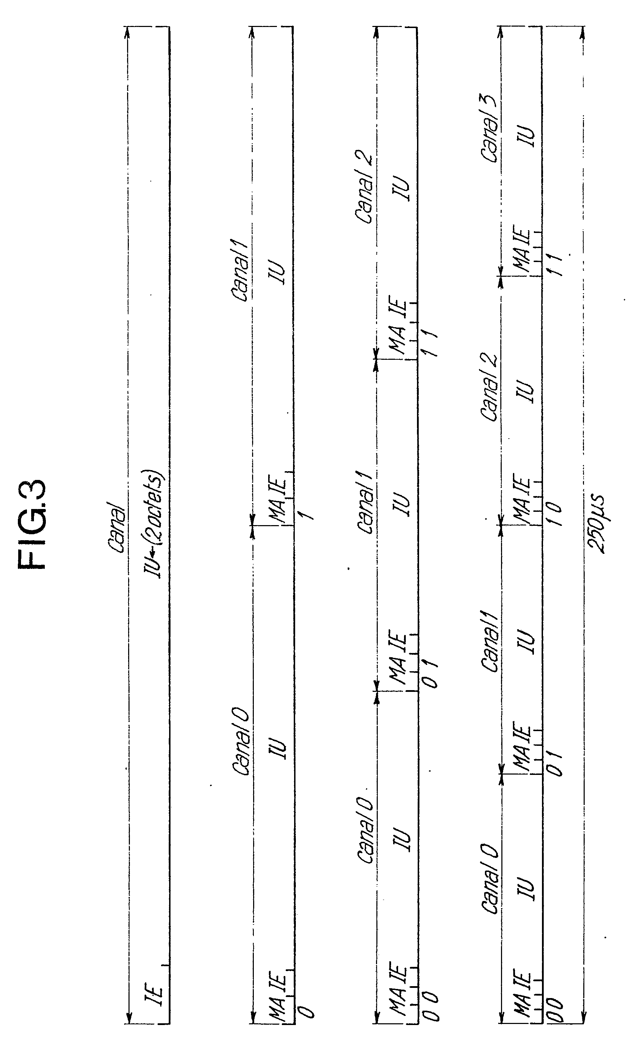

On ne décrira pas une régie d'abonné qui n'appartient pas au domaine de l'invention. Afin de fixer les idées, il est supposé seulement qu'une régie d'abonné RA est propre à transmettre et recevoir, à travers la ligne d'abonné associée, une trame récurrente qui a une durée de 250 µs et qui est analogue à l'une de celles montrées à la Fig. 3. Le premier diagramme temporel de cette Fig. 3 est une trame à un seul canal, de préférence destinée aux lignes LC, LP, LCP bien qu'elle puisse être celle d'une ligne d'abonné. Les trois autres diagrammes temporels de la Fig. 3 montrent des trames à 2, 3 ou 4 canaux assignées de préférence à des lignes d'abonné. Parmi ces 2, 3 ou 4 canaux, de préférence au moins un est assigné à la transmission de la parole en mode-circuit.

Selon la Fig. 3, le débit d'information utile, parole ou paquet, d'un canal est égal à 64 kbit/s, lequel correspond à l'échantillonnage d'un signal de parole en octet à la fréquence de 8 kHz. Dans chaque trame de 250 µs ($= 2/(8.10^3)$), un canal transite un mot d'adresse de canal MA, ou dit généralement de verrouillage un bit d'information d'exploitation IE et 2 octets paquetisés d'information utile IU en mode-circuit ou en mode-paquet qui lui sont propres. Le tableau I suivant indique les nombres de bits affectés aux informations et leurs débits en correspondance avec la Fig. 3.

Tableau I

| Nombre de canaux par trame K | Nombre de bits par canal | | | Nombre de bits par trame | | | Débit en kbit/s | | | |
|---|---|---|---|---|---|---|---|---|---|---|
| | MA | IE | IU | MA | IE | IU | MA | IE | IU | Réel |
| 1 | 0 | 1 | 16 | 0 | 1 | 16 | 0 | 4 | 64 | 68 |
| 2 | 1 | 1 | 16 | 2 | 2 | 32 | 8 | 8 | 128 | 144 |
| 3 | 2 | 1 | 16 | 6 | 3 | 48 | 24 | 12 | 192 | 228 |
| 4 | 2 | 1 | 16 | 8 | 4 | 64 | 32 | 16 | 256 | 304 |

Dans un canal en mode-paquet, plusieurs messages peuvent être multiplexés statistiquement, chacun d'eux ayant des débits sous-multiples de 64 kbit/s.

On décrira d'abord en détail un module de raccordement MR, les modifications apportées au réseau de commutation et à l'unité de marquage par la présente invention étant présentées ultérieurement.

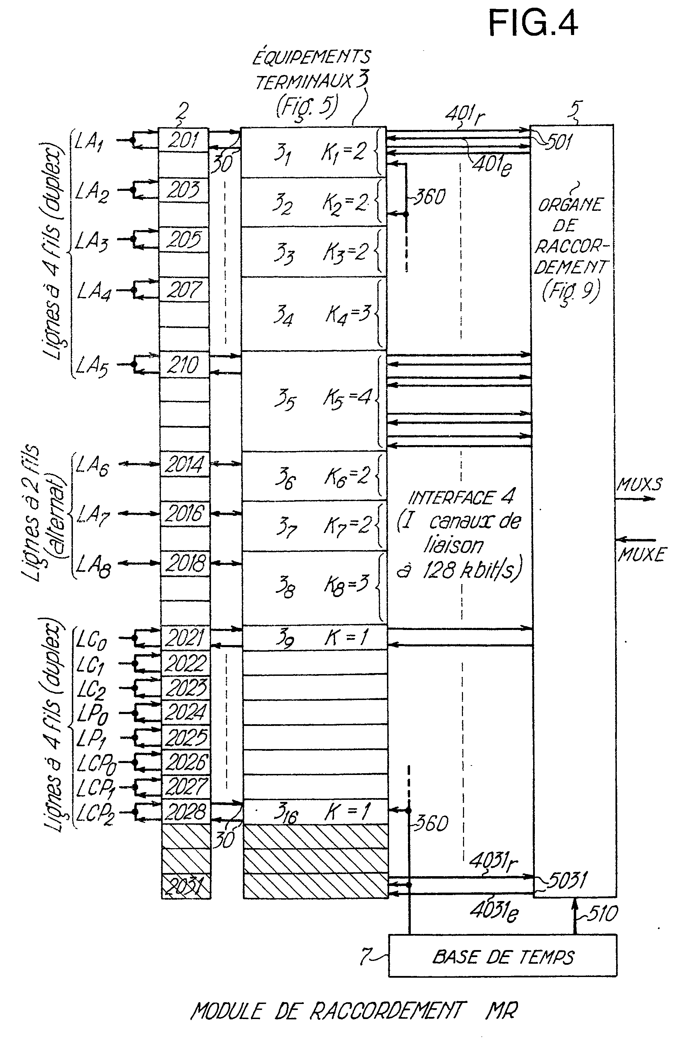

La Fig. 4 montre l'organisation générale d'un module de raccordement MR. Il comporte, du côté des lignes externes au système multiservice, une barrette de raccordement 2 qui comprend I = 31 paires de moyens de connexion 201 à 2031. Chaque paire peut être reliée à une ligne bifilaire en mode de transmission à l'alternat ou semi-duplex, ou à l'une des paires de fils d'une ligne à quatre fils en mode de transmission duplex. Ce nombre 31 a été choisi en fonction du nombre I + 1 = 32 de canaux de la trame des multiplex sortant et entrant, MUXS et MUXE, du module de raccordement. Selon cette première réalisation, pour laquelle le module de raccordement est synchronisé directement par la base de temps BT du réseau de commutation 1, le premier intervalle de temps $IT_0$ des multiplex MUXS et MUXE est réservé à la transmission des informations d'exploitation des 31 canaux multiplexés.

En général, au moins une ligne en mode-circuit LC et au moins une ligne en mode-paquet LP reliées aux interfaces d'adaptation aux réseaux extérieurs RE et au moins une ligne en mode-paquet LCP reliée au commutateur de paquets CP sont connectées à la barrette de raccordement. Toutes ces lignes ont un débit d'information utile de 64 kbit/s et sont du type à quatre fils. Les autres lignes raccordées à la barrette 2 sont des lignes d'abonné LA convoyant chacune 1, 2, 3 ou K canaux multiplexés selon la Fig. 3. Ces lignes d'abonné peuvent être à deux fils en mode semi-duplex (ou dit à l'alternat) ou à quatre fils en mode duplex. Si une ligne a deux fils, elle est raccordée à l'un des moyens de connexion d'une paire 20 de la barrette 2.

De l'autre côté de la barrette 2, chaque ligne est reliée à des bornes 30 d'un équipement terminal de transmission 3. Ces bornes 30 sont en nombre égal au nombre de fils de ligne. Cet équipement 3 assure l'adaptation électrique des caractéristiques de la ligne et logique du mode de transmission à celles des multiplex sortant et entrant MUXS et MUXE du module de raccordement MR. L'équipement 3 assure des fonctions analogues à celles d'un équipement individuel d'abonné EIA selon la Fig. 1, en ce sens, qu'il démultiplexe les informations utiles dans la ligne en K canaux transmis vers une interface 4 et qu'il multiplexe ces derniers selon l'autre direction de transmission. Mais l'équipement 3 distingue également dans chacun des canaux les informations utiles IU et les informations d'exploitation IE, afin que celles-ci soient traitées séparément dans un organe de raccordement 5. Cependant, les canaux de liaison 40 de l'interface 4 ne sont pas au débit de 64 kbit/s, mais au débit uniformisé de 128 kbit/s, car ils sont issus du multiplexage des informations utiles à 64 kbit/s et des informations d'exploitation à 4 kbit/s d'un canal dans l'équipement terminal 3.

Ainsi, selon la Fig. 4, si le module de raccordement comporte I = 31 emplacements de terminaux élémentaires pour des lignes monocanales, chaque terminal occupera un nombre d'emplacements égal au nombre de canaux multiplexés dans la ligne qu'il dessert. En d'autres termes, pour chaque type de ligne, on choisira un équipement terminal correspondant en fonction d'une part, du nombre de canaux et, d'autre part, du mode de transmission, duplex ou semi-duplex, de la ligne.

Du côté des multiplex MUXE et MUXS, le module de raccordement comporte l'organe de raccordement 5 qui multiplexe les canaux de toutes les lignes. Cet organe comporte 31 paires de bornes 501 à 5031 reliées bidirectionnellement aux 31 canaux de liaison 401 à 4031 de l'interface 4. On voit que, quels que soient les types de ligne à raccorder, l'organe 5 n'est pas modifié, et que l'interface 4 assure la banalisation des lignes, ce qui permet, en pratique, de raccorder tous types de lignes en fonction des emplacements disponibles des terminaux, au fur et à mesure des besoins des abonnés.

Selon l'exemple illustré à la Fig. 4, huit lignes d'abonné $LA_1$ à $LA_8$ sont raccordées au module de raccordement et trois emplacements correspondant aux moyens de connexion 2029 à 2031 sont disponibles pour des raccordements futurs de nouvelles lignes, ou pour une ligne d'abonné dont le nombre de canaux est à augmenter. On a supposé que ces huit lignes d'abonné $LA_1$ à $LA_8$ sont des types suivants :

— $LA_1$ à $LA_3$ : lignes à quatre fils en mode duplex au débit réel de 144 kbit/s, ayant chacune $K_1 = K_2 = K_3 = 2$ canaux, l'un en mode-circuit et l'autre en mode-paquet ;

— $LA_4$ : ligne à quatre fils en mode duplex au débit réel de 228 kbit/s, ayant $K_4 = 3$ canaux, un ou deux en mode-circuit et deux ou un en mode-paquet ;

— $LA_5$ : ligne à quatre fils en mode duplex au débit réel de 304 kbit/s, ayant $K_5 = 4$ canaux, un, deux ou trois en mode-circuit et trois, deux ou un en mode-paquet ;

— $LA_6$ et $LA_7$ : lignes à deux fils en mode semi-duplex au débit réel de $2 \times 144$ kbit/s, ayant chacune $K_6 = K_7 = 2$ canaux, l'un en mode-circuit et l'autre en mode-paquet ;

— $LA_8$ : ligne à deux fils en mode semi-duplex au débit réel de $2 \times 228$ kbit/s ayant $K_8 = 3$ canaux, un ou deux canaux en mode-circuit et deux ou un canaux en mode-paquet.

Les terminaux $3_1$ à $3_{16}$ sur la Fig. 4 desservent respectivement les lignes $LA_1$ à $LA_8$, $LC_0$ à $LC_2$, $LP_0$, $LP_1$ et $LCP_0$ à $LCP_2$. Par exemple, le terminal $3_5$ occupe l'emplacement équivalent à quatre terminaux élémentaires à ligne monocanale telle que LC, LP ou LCP.

Bien entendu, toutes les lignes peuvent être du même type. Ainsi, le module RM à I canaux de liaison $40_1$ à $4\,03_1$ peut desservir 15 lignes à deux canaux, 10 lignes à trois canaux ou 7 lignes à quatre canaux.

Cette adaptation en fonction des besoins des abonnés confère une véritable banalisation au niveau de l'interface 4. Pour un nombre prédéterminé I de canaux de liaison, toutes les combinaisons de raccordement avec les divers types de régies, à petite ou grande capacité et à nombre petit ou grand de postes téléphoniques et/ou de terminaux de données, sont possibles. En particulier, on notera que l'affectation du mode-circuit ou du mode-paquet à un canal multiplexé dans une ligne d'abonné peut être dynamique au moyen d'un organe de sélection approprié commandé par l'abonné et inclus dans la régie, en fonction des besoins de l'abonné à un instant donné. Par ailleurs, conjointement à la simultanéité d'au moins deux communications en mode-circuit et en mode-paquet sur une ligne d'abonné, plusieurs paquets de données respectivement affectés à plusieurs équipements péri-informatiques peuvent être transmis par multiplexage dans un même canal en mode-paquet, la somme des débits d'informations utiles relatifs à ces divers équipements ne pouvant excéder le débit maximal de 64 kbit/s.

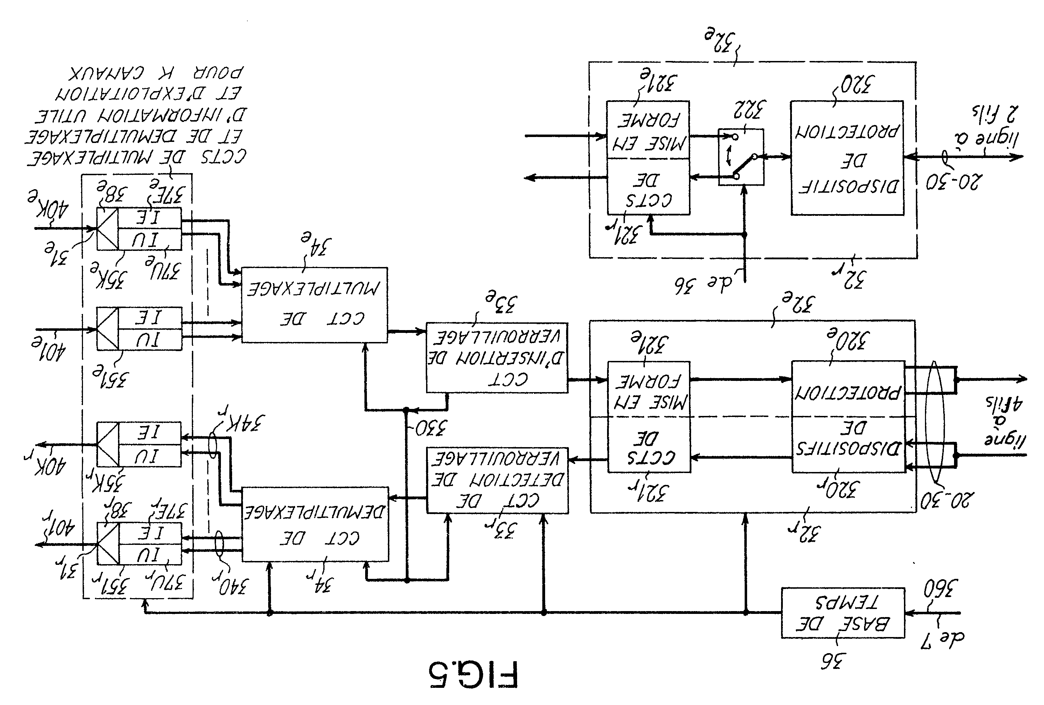

En référence à la Fig. 5, on décrit maintenant en détail un équipement terminal de transmission 3 relié à une ligne numérique L à K canaux multiplexés. Cette ligne est indifféremment une ligne d'abonné LA ou une ligne en mode-circuit LC et/ou en mode-paquet LP ou LCP. L'équipement 3 comprend respectivement suivant la direction de réception r — ligne L vers interface 4 — et suivant la direction d'émission opposée e — interface 4 vers ligne L — deux circuits de mise en forme et d'adaptation électrique $32_r$ et $32_e$, un circuit de détection de verrouillage $33_r$ et un circuit d'insertion de verrouillage $33_e$, un circuit de démultiplexage $34_r$ et un circuit de multiplexage $34_e$ relatifs aux canaux et K circuits de démultiplexage $351_r$ à $35K_r$ et K circuits de multiplexage $351_e$ à $35K_e$ relatifs aux informations utiles et d'exploitation. Il comprend également une base de temps 36 qui reçoit des signaux d'horloge de la base de temps générale 7 (Fig. 4) du module de raccordement à travers un bus 360 et qui commande les circuits précédents au moyen de signaux d'horloge synchrones aux fréquences notamment de 64 kHz, 4 kHz et à celle correspondant au débit réel binaire dans la ligne L.

Les circuits $32_r$ et $32_e$ peuvent être de deux types en dépendance du mode de transmission lorsqu'ils sont desservis par une ligne d'abonné LA.

Comme montré en traits pleins à la Fig. 5, lorsque la ligne est du type à quatre fils en mode duplex, dans chacun des circuits $32_r$, $32_e$, un dispositif de protection $320_r$, $320_e$ est connecté, à travers une paire de bornes de moyens de connexion 20 de la barrette de raccordement 2, à une paire de fils de la ligne correspondant à la direction de transmission de réception, resp. d'émission, et est en série avec un circuit de mise en forme $321_r$, $321_e$. Les dispositifs de protection sont d'un type connu et protègent les composants physiques de l'équipement 3 contre des surtensions accidentelles et indésirables sur la ligne L suivant les deux directions de transmission. Les circuits de mise en forme $321_r$ et $321_e$ transcodent les digits en code de ligne, par exemple en code bipolaire, tel que le code HDB3, en les bits correspondants pour leur traitement dans le module de raccordement.

Lorsque la ligne est une ligne d'abonné LA du type à deux fils en mode à l'alternat, comme montré en traits interrompus courts à la Fig. 5, l'ensemble des circuits $32_r$ et $32_e$ ne comprend qu'un unique dispositif de protection 320. Celui-ci est interconnecté au deux fils de ligne LA, à travers une paire de bornes d'un moyen de connexion 20 de la barrette de raccordement 2, et au point de connexion commun d'un circuit 322 de commutation à deux voies et à moyens d'expansion et de compression de débit. Ces expansion et compression de débit permettent, comme il est connu, de doubler ou plus le débit numérique dans le terminal afin d'assurer la transmission à l'alternat. Les deux autres bornes du circuit 322 sont reliées, d'une part, aux circuits de mise en forme $321_r$ et $321_e$ et, d'autre part, alternativement pendant un cycle élémentaire à l'alternat, à la ligne L à travers le dispositif de protection 320. Selon les caractéristiques du multiplexage montrées à la Fig. 3, le cycle élémentaire à l'alternat est égal au quotient de la durée d'une trame de 250 µs par le nombre K de canaux. Pendant une alternance de 62, 5 ; 41, 66 ; 31, 25 µs, les dix-huit ou dix-neuf digits du premier canal d'adresse 0 sont émis sur la ligne vers la régie d'abonné associée RA et pendant l'alternance suivante un même nombre de digits du canal 0 est reçu en provenance de la régie d'abonné, selon que le débit en ligne est de $2 \times 144 = 288$, $2 \times 228 = 456$ ou $2 \times 304 = 608$ kbit/s. En référence au tableau I et à la Fig. 3, le cycle élémentaire suivant est relatif au second canal d'adresse 1 et ainsi de suite jusqu'au dernier canal K. Un cycle de transmission d'une trame à K canaux dure 250 µs.

On notera que, relativement à une modification du mode de transmission d'une ligne dont le nombre K de canaux reste inchangé, le boîtier contenant les circuits $32_r$ et $32_e$ peut être prévu interchangeable sur la carte de circuit imprimé qui constitue le terminal 2 afin de réduire les coûts de fabrication.

Le circuit de détection $33_r$ a son entrée reliée à la sortie du circuit de mise en forme et d'adaptation électrique $32_r$. Il détecte les mots de verrouillage MA qui sont insérés dans l'en-tête de chaque canal par l'équipement terminal de la régie. Ces mots de verrouillage MA ont une configuration fixe, généralement correspondant au numéro ou adresse en code binaire du canal de la trame de 250 µs, comme montré à la Fig. 3. En émission, le circuit d'insertion de verrouillage $33_e$ effectue l'opération inverse en insérant les mots de verrouillage au début des intervalles de temps respectifs des canaux. Le circuit $33_e$ comprend un générateur de mots de verrouillage qui délivre à chaque émission d'un mot de verrouillage un signal vers le circuit de détection $33_r$ et l'ensemble des circuits de multiplexage et de démultiplexage $34_r$, $34_e$, via le fil 330. Ceci permet d'assurer la synchronisation du terminal de la régie, constituant une station « esclave », relativement au terminal 3, constituant une station « maître », et de supprimer à la réception les mots de verrouillage dans le circuit de multiplexage $34_r$.

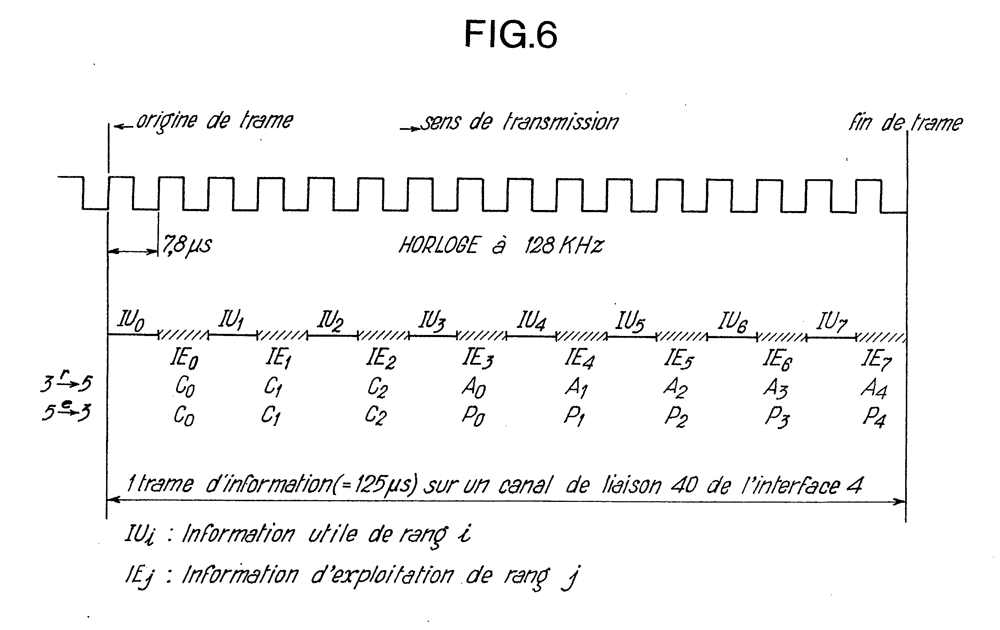

Le premier circuit de démultiplexage $34_r$ démultiplexe les K canaux reçus sur K paires de voies $340_r$ à $34 K_r$. Chacune de ces paires de voies est reliée aux deux entrées d'un circuit de multiplexage correspondant $351_r$ à $35 K_r$. L'une des voies d'une paire convoie les informations utiles IU du canal 1 à K au débit de 64 kbit/s tandis que l'autre voie convoie les informations d'exploitation IE du canal 1 à K au débit de 4 kbit/s. Chaque circuit de multiplexage $35_r$ est constitué par deux mémoires tampons $37 U_r$ et $37 E_r$ qui stockent respectivement les informations utiles IU et d'exploitation IE sous la commande de signaux d'écriture aux fréquences de 64 et 4 kHz délivrés par la base de temps 36. Ces deux mémoires sont lues alternativement à la fréquence de 128 kHz afin que le convertisseur parallèle-série $38_r$ en sortie $31_r$ du circuit $35_r$ délivre une trame qui est composée de 8 bits d'informations utiles IU et de 8 bits d'informations d'exploitation IE entrelacés à l'ordre de deux qui a une durée de 125 µs, comme montré à la Fig. 6. Cette trame transite sur le fil de liaison correspondant 40 de l'interface 4 avec un débit de 128 kbit/s.

Le circuit de démultiplexage $351_e$ à $35 K_e$ et le circuit de multiplexage $34_e$ effectuent les opérations inverses de celles décrites précédemment. Chaque circuit de démultiplexage $35_e$ démultiplexe les informations utiles et d'exploitation émises par l'organe 5 sur l'autre fil $40_e$ de la liaison correspondante à 128 kbit/s au moyen d'un convertisseur série-parallèle $38_e$ et de deux mémoires tampons $37 U_e$ et $37 E_e$. Ces deux mémoires sont affectées aux informations utiles et d'exploitation et sont lues aux fréquences de 64 et 4 kHz. Le circuit de multiplexage $34_e$ multiplexe les informations utiles et d'exploitation de chaque canal, d'une part, et les K canaux en vue de former une trame récurrente selon la Fig. 3, d'autre part. Les intervalles élémentaires réservés aux mots de verrouillage dans cette trame sont vides et sont remplis par ces derniers dans le circuit d'insertion de verrouillage $33_e$.

On notera que, pour un terminal de transmission desservant une ligne monocanale, selon la première ligne de la Fig. 3, le bloc-diagramme de la Fig. 5 est plus simple. Il est dépourvu des circuits de détection et d'insertion de verrouillage $33_r$ et $33_e$ et ne comprend qu'une seule paire de circuits de démultiplexage et de multiplexage $35_r$, $35_e$. Les circuits de mise en forme et d'adaptation électrique $32_r$ et $32_e$ sont directement reliés aux circuits de multiplexage et de démultiplexage $34_r$, $34_e$. Ce cas simple correspond à un terminal relié à une ligne d'abonné LA à affectation dynamique de l'unique canal au mode-circuit ou au mode-paquet ou une ligne en mode-paquet LP ou LCP au débit réel de 68 kbit/s.

Avant de décrire l'organe de raccordement au réseau 5 qui est le même dans tous les modules de raccordement MR, on indique ci-après les caractéristiques des trames transitant dans l'interface 4 et sur une liaison multiplex MUKS-MUXE reliée au réseau de commutation.

Comme déjà dit, en référence à la Fig. 3, une trame transitant sur une liaison 40 de l'interface relative à un canal a une durée de 125 µs et comporte un octet d'information utile dont les bits $IU_0$ à $IU_7$ sont entrelacés à l'ordre deux avec les bits $IE_0$ à $IE_7$ d'un octet d'information d'exploitation du début à la fin de la trame : $IU_0$, $IE_0$, $IU_1$, $IE_1$... $IU_7$, $IE_7$. Le débit binaire selon les deux directions de transmission est égal à 128 kbit/s. La fréquence des trames en émission ou en réception de tous les canaux est fournie par la base de temps générale 7 du module de raccordement MR qui synchronise toutes les bases de temps 36 des équipements terminaux de transmission 3, via le bus 360 et, donc toutes les trames transitant à travers l'interface 4.

Les sept derniers bits $IU_1$ à $IU_7$ d'un octet d'information utile en mode-circuit sont représentatifs de valeur codée d'un échantillon de parole. Le bit de poids élevé est le second bit $IU_1$. Le premier bit $IU_0$ est un bit de signe. Lorsque cet octet est relatif à un canal en mode-paquet, il contient huit bits quelconques d'information selon la procédure déjà citée HDLC. Les informations utiles en mode-paquet ne sont pas synchrones en trame, au sens de la définition du terme trame pour une transmission en mode-paquet sur une liaison multiplex MUX, mais sont seulement synchrones au niveau du débit des bits. La notion de trame sur une liaison à 128 kbit/s de l'interface 4 n'existe plus pour les informations utiles en mode-paquet.

Un octet d'information d'exploitation est partagé en deux premiers champs d'information.

Un premier champ est assigné aux trois premiers bits $IE_0$, $IE_1$ et $IE_2$ et indique le type de l'équipement raccordé à la ligne LA, LC, LP ou LPC transitant le canal et la nature, en mode-circuit ou en mode-paquet, du canal. Ils sont désignés ci-après et dans la Fig. 6 par $C_0$, $C_1$ et $C_2$. Ce premier champ est identique pour les deux directions de transmission. Les bits $C_0$, $C_1$ et $C_2$ sont indiqués dans le tableau II suivant en fonction de la provenance et de la nature du canal, selon une réalisation préférée.

Tableau II

| $C_0$, $C_1$, $C_2$ | Type de ligne | Nature du canal |
|---|---|---|
| 0  0  0 | non raccordée | |
| 0  0  1 | LA | mode-circuit |
| 0  1  1 | LC | mode-circuit |
| 1  0  1 | LP | mode-paquet |
| 1  1  0 | LCP | mode-paquet |
| 1  1  1 | LA | mode-paquet |

Une ligne « non raccordée » correspond, en pratique, à un canal de liaison 40 de l'interface 4 qui n'est pas reliée à ou déconnecté d'un équipement terminal 3, tel que les canaux de liaison 4 029, 4 030 et 4 031 selon la Fig. 4.

Le second champ d'information d'exploitation est assigné aux cinq derniers bits $IE_3$ à $IE_7$. Son contenu diffère selon qu'il provient de l'extérieur du système de commutation multiservice ou du réseau de commutation de celui-ci.

Suivant la direction de réception r — d'une régie d'abonné RA, des interfaces d'adaptation aux réseaux extérieurs RE ou du commutateur de paquets CP vers l'organe 5 — les bits $IE_3$ à $IE_7$ de chaque trame sont relatifs à des alarmes détectés en amont du système multiservice et transmis par l'organe correspondant RA, RE et CP. Ils indiquent par exemple un fonctionnement défectueux d'un équipement de terminal de données, fondé sur un taux d'erreurs supérieur à une valeur prédéterminée, une perte de rythme ou une coupure d'alimentation. Les bits $IE_3$ à $IE_7$ suivant la direction de réception r sont désignés ci-après et dans la Fig. 6 par $A_0$ à $A_4$.

Suivant l'autre direction de transmission dite d'émission e — de 5 vers RA, RE ou CP —, les bits du second champ d'information d'exploitation $IE_3$ à $IE_7$ sont désignés par $P_0$ à $P_4$. Ils indiquent des commandes de positionnements telles que certaines signalisations propres à la commutation dans le réseau de commutation, comme l'indisponibilité de l'abonné demandé, engorgement de trafic, etc..., ou propres à la gestion des communications, comme des bits représentatifs d'impulsions de taxe transmise au compteur de taxe de l'abonné demandeur ou d'un signal de commande de lecture de ce compteur, ou bien encore ils indiquent l'ouverture ou la fermeture d'une ligne d'abonné pour les besoins d'exploitation ou de maintenance, tels que pour des mesures de potentiel classiques dans la ligne.

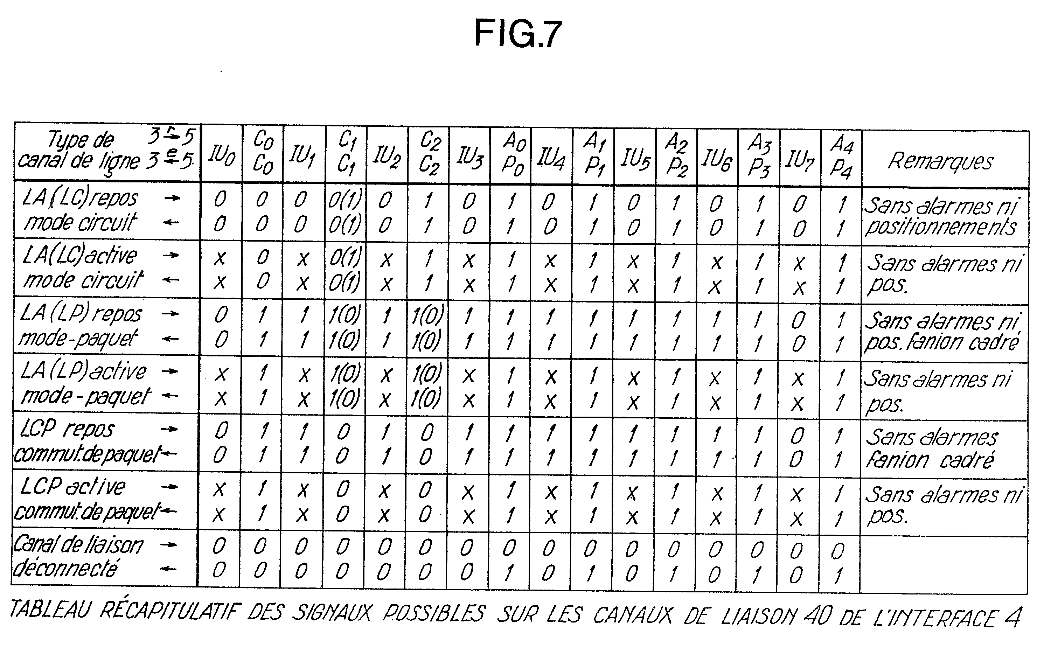

Selon cette réalisation préférée, le niveau logique haut « 1 » dans le second champ d'un octet d'exploitation signifie une absence d'alarme ou de demande de positionnement. Le tableau de la Fig. 7 récapitule les différentes trames convoyées sur un canal de liaison 40 de l'interface 4.

Les multiplex sortant MUXS et entrant MUXE de l'organe de raccordement 5 sont au débit de 2 048 kbit/s et sont partagés en trames récurrentes de 125 µs qui comprennent chacune trente et deux intervalles de temps $IT_0$ à $IT_{31}$ réservés à un octet ayant une durée de 3,9 µs. Selon la réalisation décrite précédemment pour laquelle le module de raccordement est à proximité du réseau de commutation et la base de temps 7 du module est directement synchronisée par celle BT du réseau de commutation, les intervalles réservés aux octets d'information utile IU sont au nombre de I = 31, $IT_1$ à $IT_{31}$. Les intervalles de temps $IT_1$ à $IT_{31}$ de chaque trame à 2 048 kbit/s sont respectivement assignés aux octets d'information utile $IU_0$ à $IU_7$ des canaux de liaison 401 à 4 031 de l'interface 4, aussi bien en émission qu'en réception.

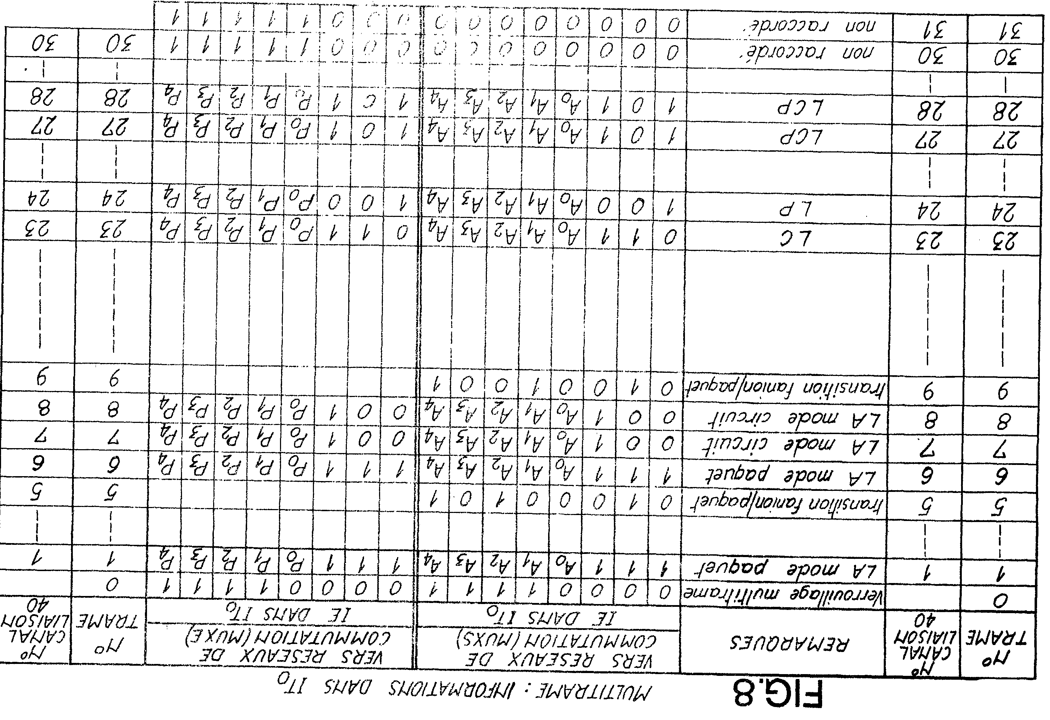

Le premier intervalle $IT_0$ est réservé à la transmission des octets d'information d'exploitation ou d'un octet d'indication de transition fanion/paquet. Ce dernier octet indique le début d'un paquet de données dans un canal en mode-paquet. Les intervalles $IT_0$ sont organisés en une multitrame qui comprend 31 trames $T_1$ à $T_{31}$ et qui a une durée de $31 \times 125 = 3\,875$ µs, comme montré à la Fig. 8. Lorsqu'aucune transition fanion/paquet n'est détectée dans un canal en mode-paquet, (par exemple trames $T_1$, $T_6$, $T_{24}$, ... Fig. 8) l'intervalle $IT_0$ de la trame correspondante est rempli de l'octet d'information d'exploitation $C_0$ à $C_2$ et $A_0$ à $A_4$ en réception ou $C_0$ à $C_2$ et $P_0$ à $P_4$ en émission. Il en est de même, mais en permanence, pour l'intervalle $IT_0$ d'une trame associée à un canal en mode-circuit ou non raccordé (trames $T_7$, $T_{23}$, $T_{30}$, Fig. 8). Lorsqu'une transition fanion/paquet est détectée à la réception dans un canal en mode-paquet provenant de l'extérieur du système, l'intervalle $IT_0$ de la trame correspondante contient un octet d'indication de transition (trames $T_5$ et $T_9$, Fig. 8). Celui-ci est composé de deux champs, comme pour un octet d'information d'exploitation. Le premier champ a trois bits et contient le mot 0 1 0 indiquant la transition. Le second champ a cinq bits et contient l'adresse du canal où la transition a été détectée. Cette adresse est par exemple le numéro codé binaire du canal 0 0 1 0 1 pour le canal N° 5 et 0 1 0 0 1 pour le canal N° 9 dans la Fig. 8. Ainsi, à tout instant sur le canal multiplex sortant MUXS de l'organe 5, l'octet d'information d'exploitation d'un canal donné en mode-paquet peut être remplacé par son octet d'indication de transition en réponse à la détection d'une transition fanion/paquet sur ce canal.

**0 057 628**

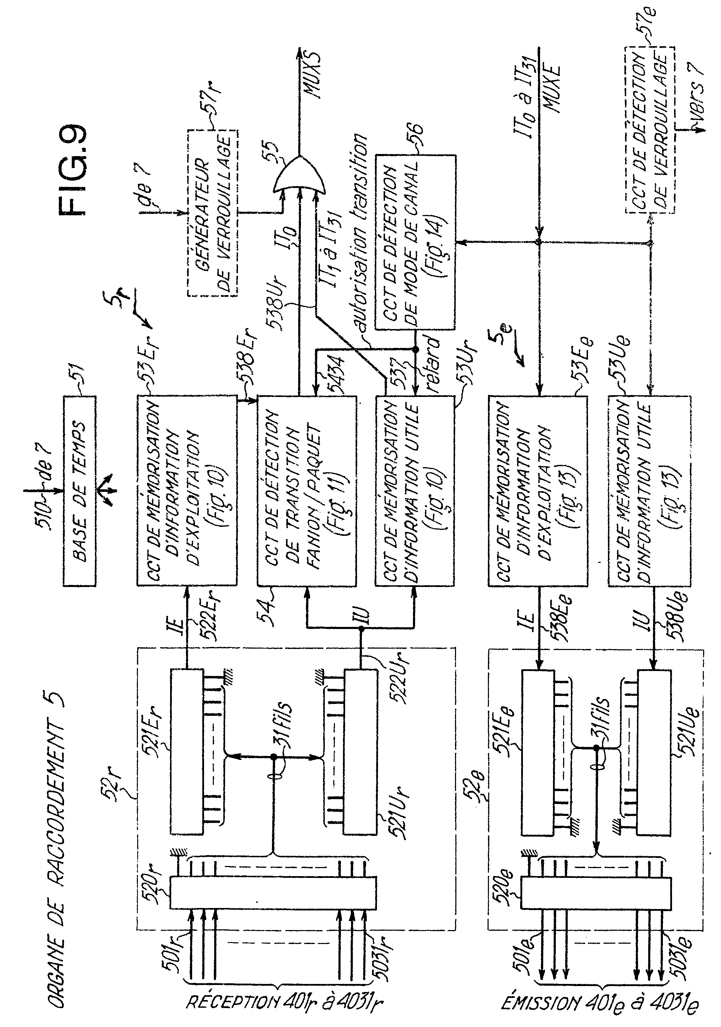

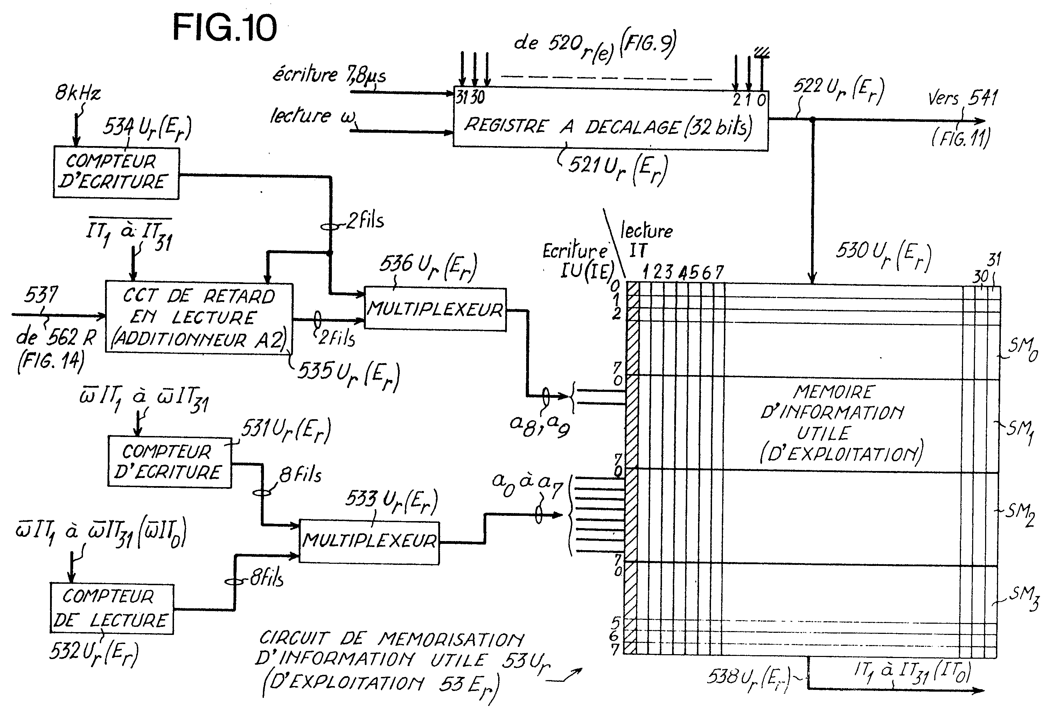

La Fig. 9 montre l'organe 5 d'un module de raccordement qui raccorde ce module au réseau de commutation à travers le multiplex bidirectionnel MUXS-MUXE à 2 048 kbit/s. Cet organe est composé d'une partie de réception $5_r$ et d'une partie d'émission $5_e$. La partie $5_r$ multiplexe respectivement les informations utiles et les informations d'exploitation des canaux de liaison $401_r$ à $4\,031_r$ de l'interface 40 en deux voies $522\,U_r$ et $522\,E_r$ dans un multiplexeur d'entrée $52_r$, sans distinction entre les différents canaux. Puis elle remet sous forme d'octets $IT_0$ et $IT_1$ à $IT_{31}$ ces séries de 31 bits de même rang et les multiplexe dans le multiplex sortant MUXS au moyen de circuits de mémorisation d'information utile et d'exploitation $53\,U_r$, $53\,E_r$, à travers une porte OU de multiplexage 55. La partie d'émission $5_e$ de l'organe de raccordement 5 comporte des circuits effectuant les opérations inverses des précédentes. Des circuits de mémorisation d'informations utile et d'exploitation $53\,U_e$, $53\,E_e$ sérialisent les bits de même rang des octets $IT_1$ à $IT_{31}$ et $IT_0$ du multiplex entrant MUXE en deux voies $522\,U_e$ et $522\,E_e$. Ces deux voies sont démultiplexées bit à bit en les trente et un canaux de liaison $401_e$ à $4\,031_e$ de l'interface 40 dans un circuit de démultiplexage $52_e$.

Les parties de réception $5_r$ et d'émission $5_e$ comprennent également deux circuits spéciaux 54 et 56. Le premier circuit 54 détecte les transitions fanion/paquet dans un canal de liaison $40_r$ en mode-paquet, afin de remplacer l'octet d'information d'exploitation par l'octet d'indication de transition. Cependant, ce remplacement n'est autorisé que lorsque le circuit de détection de mode de canal 56 de la partie d'émission détecte dans l'$IT_0$ correspondant du multiplex entrant MUXE un premier champ $C_0$, $C_1$, $C_2$ qui indique la transmission en mode-paquet de ce canal. Comme on le verra dans la suite, ceci permet de confirmer par le réseau de commutation à une régie, la modification de mode d'un canal de la ligne d'abonné.

Les différents composants des parties de réception et d'émission de l'organe de raccordement 5 sont synchronisés. Ils reçoivent des signaux d'horloge notamment aux fréquences de trame à 8 kHz, d'octets IT à 64 kHz et de bits à 2 048 kHz relatives aux multiplex MUXS et MUXE ainsi qu'aux fréquences de série de bits de même rang à 16 kHz et de bits à 128 kHz des canaux de liaison. Ces signaux d'horloge sont fournis par une base de temps 51 de l'organe 5 qui est synchronisée, via le bus 510, par la base de temps générale 7 du module de raccordement.

Les composants de la partie réception $5_r$ seront d'abord décrits.

Dans le circuit au multiplexage $52_r$, un registre tampon $520_r$ est relié en parallèle aux 31 canaux de liaison $401_r$ à $4\,031_r$ et écrit en parallèle, alternativement pendant une période de $2/128 = 15,6$ µs, à travers un bus de 31 fils, les 31 bits d'information utile de même rang dans un registre à décalage $521\,U_r$ et les 31 bits suivant d'information d'exploitation dans un registre à décalage $521\,E_r$. Cette séparation en deux voies $522\,U_r$, $522\,E_r$ des informations permet de traiter chaque série de 31 bits pendant cette période de 15,6 µs, respectivement dans les circuits de mémorisation $53\,U_r$, $53\,E_r$.

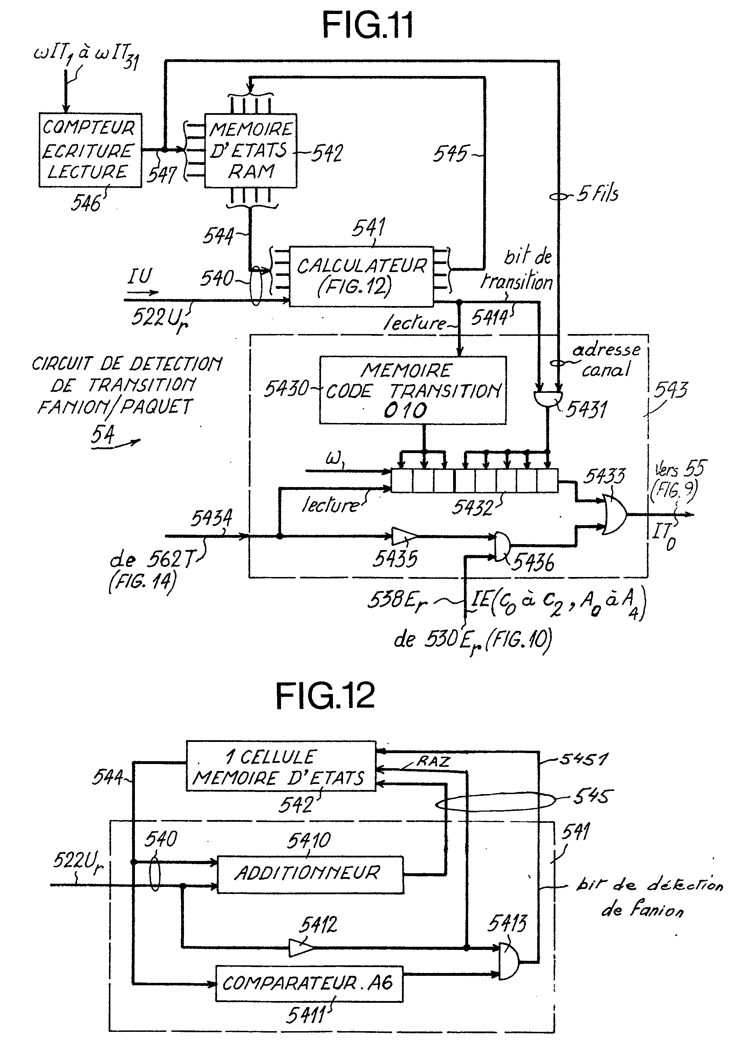

Les circuits de mémorisation d'informations utile et d'exploitation $53\,U_r$, $53\,E_r$ de la partie réception $5_r$ ont des structures analogues et ont été représentés sur la même Fig. 10. Les numéros de référence et annotations mis entre parenthèses dans cette figure sont relatifs au circuit de mémorisation d'information d'exploitation IE.

Un tel circuit de mémorisation $53\,U_r$, $53\,E_r$ est organisé autour d'une mémoire à 1 024 bits $530\,U_r$, $530\,E_r$ qui est partagée en quatre sous-mémoires $SM_0$ à $SM_3$. Chaque sous-mémoire comprend une matrice de 256 cellules à 1 bit ayant 8 lignes d'écriture et 32 colonnes de lecture. L'adressage de chaque sous-mémoire s'effectue par l'intermédiaire d'un multiplexeur $533\,U_r$, $533\,E_r$ qui multiplexe les adresses d'écriture et de lecture à 8 bits $a_0$ à $a_7$ délivrées par deux compteurs $531\,U_r$, $531\,E_r$ et $532\,U_r$, $532\,E_r$. D'une manière analogue, l'adresse à deux bits $a_8$, $a_9$ sélectionnant les sous-mémoires $SM_0$ à $SM_4$ est délivrée par un compteur d'écriture $534\,U_r$, $534\,E_r$ et un circuit de lecture $535\,U_r$, $535\,E_r$ à travers un multiplexeur $536\,U_r$, $536\,E_r$.

Comme déjà dit, chaque registre à décalage à 32 étages $521\,U_r$, $521\,E_r$ dispose de $2 \times 7,8 = 15,6$ µs pour transférer son contenu dans la mémoire $530\,U_r$, $530\,E_r$ à travers le fil $522\,U_r$, $522\,E_r$. Un bit peut donc être traité pendant un intervalle de temps élémentaire $\omega = 15,6$ µs$/32 = 488$ ns, qui correspond au débit binaire de 2 048 kbit/s sur le multiplex MUXS, MUXE. En pratique, cet intervalle $\omega$ est utilisé pour moitié pour adresser la mémoire $530\,U_r$, $530\,E_r$ et pour moitié pour écrire ou lire un bit dans cette mémoire. L'adresse précédente comprend des première et seconde parties $a_0$ à $a_7$ et $a_8$, $a_9$ qui correspondent au numéro de la cellule 0 à 255 d'une sous-mémoire et au numéro de la sous-mémoire.

On se réfère en premier lieu au circuit de mémorisation d'information utile $53\,U_r$. Dans la mémoire $530\,U_r$ de celui-ci, la colonne de rang zéro n'est pas utilisée. Il en est de même dans les six registres des circuits de multiplexage et de démultiplexage $52_r$, $52_e$. Au début d'une multitrame du multiplex sortant à 2 048 kbit/s, les bits de rang zéro $IU_0$ sont stockés dans la première ligne d'une sous-mémoire, telle que $SM_0$, et ainsi de suite jusqu'au stockage des bits de rang sept $IU_7$ dans la dernière ligne de la sous-mémoire $SM_0$. Cette écriture est commandée par le compteur $531\,U_r$ qui est incrémenté à chaque intervalle $\omega$ pendant les intervalles de temps $IT_1$ à $IT_{31}$. La mise en forme d'octets s'effectue par la lecture colonne par colonne, de rang 1 à 31, sous la commande du compteur de lecture $532\,U_r$. La sortie $538\,U_r$ de la mémoire $530\,U_r$ fournit les octets d'information utile $IT_1$ à $IT_{31}$ d'une trame.

Etant donné qu'une sous-mémoire SM ne peut être lue qu'octet par octet suivant les colonnes successives avant que les huit séries de 31 bits de même rang soient complètement écrits, la lecture des bits d'une sous-mémoire est retardée par rapport à son écriture d'au moins une durée de trame de 125

10

µs, de préférence 2 fois 125 µs. En outre, comme on le verra dans la suite, il est nécessaire de retarder encore d'une durée de 125 µs la lecture des octets d'un canal en mode-paquet afin de procéder aux détections des transitions fanion/paquet, mais surtout de permettre la confirmation d'un changement de mode par le réseau de commutation relativement à un canal d'une ligne d'abonné. Cette distinction entre le retard entre écriture et lecture de 250 µs pour un canal en mode-circuit et de 375 µs pour un canal en mode-paquet, notamment pour une ligne d'abonné, est indiquée par un signal transmis au circuit de lecture 535 $U_r$ sur un bus 537 par le circuit de détection de mode de canal 56. Le compteur d'écriture 534 $U_r$ transmet une adresse de sous-mémoire $a_8$, $a_9$ à la fréquence de 16 kHz, tandis que le circuit de lecture 535 $U_r$ transmet une adresse de lecture d'une autre sous-mémoire à la fréquence d'octets IT 64 kHz. Le circuit de lecture 535 $U_r$ additionne 2 ou 3 modulo 4 à l'adresse transmise par le compteur d'écriture 534 $U_r$ selon que le signal sur le bus 537 indique un canal en mode-circuit ou en mode-paquet. Si l'on suppose que les sous-mémoires sont écrites selon l'ordre $SM_0$, $SM_1$, $SM_2$, $SM_3$ ligne par ligne dans chacune, la lecture colonne par colonne s'effectue selon l'ordre $SM_2$, $SM_3$, $SM_0$, $SM_1$ pour des octets UI en mode-circuit et selon l'ordre $SM_1$, $SM_2$, $SM_3$, $SM_0$ pour des octets UI en mode-paquet.

Comparativement au circuit de mémorisation d'information utile 53 $U_r$ qui vient d'être décrit, le circuit de mémorisation d'information d'exploitation 53 $E_r$ diffère par ses circuits de lecture 532 $U_r$ et 535 $U_r$. Le compteur 532 $U_r$ n'est pas incrémenté que pendant les $IT_0$ de la multitrame afin que la sortie 538 $E_r$ de la mémoire 530 $E_r$ délivre les octets d'exploitation, tels que ceux montrés à la Fig. 8. Le retard entre l'écriture et la lecture dans une sous-mémoire de la mémoire d'information d'exploitation est constant et égal à 250 µs et n'est imposé que pour inhiber le chevauchement des écritures et lecture. Le circuit de retard en lecture 535 $E_r$ n'est qu'un simple additionneur à 2 modulo 4 qui est interconnecté à la sortie du compteur d'écriture 534 $E_r$ et au multiplexeur 536 $E_r$.

Le circuit de détection de transition fanion/paquet 54 est illustré à la Fig. 11. Il est structuré autour d'un calculateur 541 qui est associé à une mémoire d'état auxiliaire 542 et qui déclenche la production d'un mot d'indication de transition dans un circuit 543 en réponse à la détection d'une transition fanion/paquet. Une transition fanion/paquet correspond au drapeau d'ouverture qui précède le champ d'adresse de la trame de paquet suivante. Chaque trame de paquet ne contient pas de fanions afin qu'aucune séquence de drapeau ne soit simulée.

La sortie 522 $U_r$ du registre d'information utile 521 $U_r$ (Figs 9 et 10) ainsi que le bus de sortie 544 de la mémoire 542 constitue le bus d'adressage à 5 fils 540 d'une mémoire programmable PROM qui est contenue dans le calculateur 541. Cette mémoire a 32 cellules à 5 bits et un programme est déterminé en fonction de l'état d'entrée fourni sur le bus 540. L'état suivant résultant de ce programme est appliqué par un bus de sortie à quatre fils 545 dans la cellule correspondante de la mémoire 542. Cette dernière mémoire est une mémoire vive RAM ayant 32 cellules à 4 bits qui correspondent chacune à l'état d'un canal de liaison 401$_r$ à 4 031$_r$. Elle est lue et écrite par un compteur 546, via le bus d'adresse de canal 547, à la fréquence de 2 048 kbit/s pendant un cycle récurrent de 32 ω correspondant à une série de 31 bits d'information utile de même rang sur le fil 522 $U_r$.

Le programme du calculateur 541 est composé de deux sous-programmes. Le premier sous-programme est propre à la détection des fanions entre les trames de paquet pour chaque canal de liaison. Le second sous-programme est propre à la détection de chaque fanion d'ouverture de trame de paquet pour chaque canal de liaison.

Seulement les fonctions du matériel équivalent au premier sous-programme et relatif à un bit de canal de liaison sont simulées schématiquement à la Fig. 12. Ce matériel comprend essentiellement un additionneur d'état 5 410 et un comparateur à six 5 411.

Dans la Fig. 12, on a représenté en 542 une cellule d'état relative à un canal déterminé. La sortie 544 de cette cellule est reliée à l'une des entrées de l'additionneur 5 410 et à l'entrée du comparateur 5 411. L'autre entrée de l'additionneur 5 410 constitue le fil 522 $U_r$ et est reliée, à travers un inverseur 5 412, à une entrée d'une porte ET 5413 et à l'entrée de remise à zéro (RAZ) de la cellule de mémoire 542. L'autre entrée de la porte 5 413 est reliée à la sortie du comparateur 5 411. Les sorties de l'additionneur 5 410 et de l'inverseur 5 412 sont équivalentes à des fils du bus de transfert d'état sortant 545.

On rappelle qu'un fanion est l'octet 0 1 1 1 1 1 1 0. Tant que les bits reçus du canal considéré sont au niveau bas, la cellule de mémoire 544 est à l'état E = 0. Dès qu'un bit au niveau haut est reçu à l'entrée 522 $U_r$, l'état de la cellule de mémoire n'est pas remis à zéro et son état précédent est additionné à l'unité au moyen de l'additionneur 5 410 : E = E + 1. Si l'état de la cellule de mémoire est égal à E = 6 sur le bus 540 simultanément à la réception d'un bit au niveau bas, suite à six bits « 1 » consécutifs, la sortie du comparateur ouvre la porte 5 413 qui délivre un bit de détection de fanion via un fil 5 451 du bus de sortie 545 du calculateur 541 à la cellule de mémoire 542. En réponse à ce septième bit, la partie de la cellule de mémoire correspondant au premier sous-programme est remise à zéro à travers le bus 545. Une telle détection de fanion est accomplie pour chacun des trente et un canaux de liaison.

Une seconde partie de la cellule de mémoire correspond au second sous-programme et comprend une bascule à laquelle est appliqué le bit de détection de fanion via le fil 5 451. Ce bit est lu et transmis au second matériel du calculateur 541, via le bus 544, qui correspond au second sous-programme, toutes les 125 µs afin que ce bit soit comparé au bit d'état précédent de ladite bascule. Dès que le second matériel détecte un changement déterminé du bit de la bascule qui correspond à la transition fanion d'ouverture/début de trame de paquet, le calculateur 541 délivre un bit de transition fanion/paquet sur son fil de sortie 5 414.

En se reportant à nouveau à la Fig. 11, un bit de transition sur le fil 5 414 commande la lecture d'une mémoire morte 5 430 et l'ouverture de cinq portes ET 5 431 pour transférer en parallèle respectivement le mot de code de transition 0 1 0 et l'adresse du canal délivrée par le compteur 546 dans un registre à décalage 5 432. Le contenu de ce registre contient un mot d'indication de transition (0 1 0 + adresse de canal) tel que celui pour le canal N° 9 de la Fig. 8. Le contenu sérialisé du registre 5 432 n'est transmis, à travers une porte OU 5 433, vers la porte de multiplexage de sortie 55 (Fig. 9) seulement lorsque le registre 5 432 reçoit un signal d'autorisation de lecture pour chaque canal de liaison par le circuit de détection de mode de canal 56, via le fil 5 434, en réponse à un mot de code $C_0$ $C_1$ $C_2$ indiquant le mode-paquet dans le tableau II.

Le fil 5 434 est également relié, à travers un inverseur 5 435 et une porte ET 5 436, à l'autre entrée de la porte OU 5 433. L'autre entrée de la porte ET 5 436 est reliée à la sortie 538 $E_r$ de la mémoire d'information d'exploitation 530 $E_r$ (Fig. 10). Ainsi, tant qu'une transition paquet/fanion n'est pas détectée par le calculateur 541, l'intervalle $IT_0$ d'un canal donné de la multitrame à 2 048 kbit/s est occupé par un octet d'information d'exploitation $C_0$ à $C_2$ et $A_0$ à $A_4$.

En se reportant de nouveau à la Fig. 9, la porte de multiplexage 55 est reliée à la sortie de la porte OU 5 433 du circuit de détection de transition (Fig. 11) qui transmet les octets $IT_0$ de la multitrame, et à la sortie 538 $U_r$ de la mémoire 530 $U_r$ du circuit de mémorisation d'information utile (Fig. 10) qui transmet les octets $IT_1$ à $IT_{31}$ de chaque trame à 2 048 kbit/s. La sortie MUXS de la porte 55 délivre aussi les multitrames telles que celle montrée à la Fig. 8.

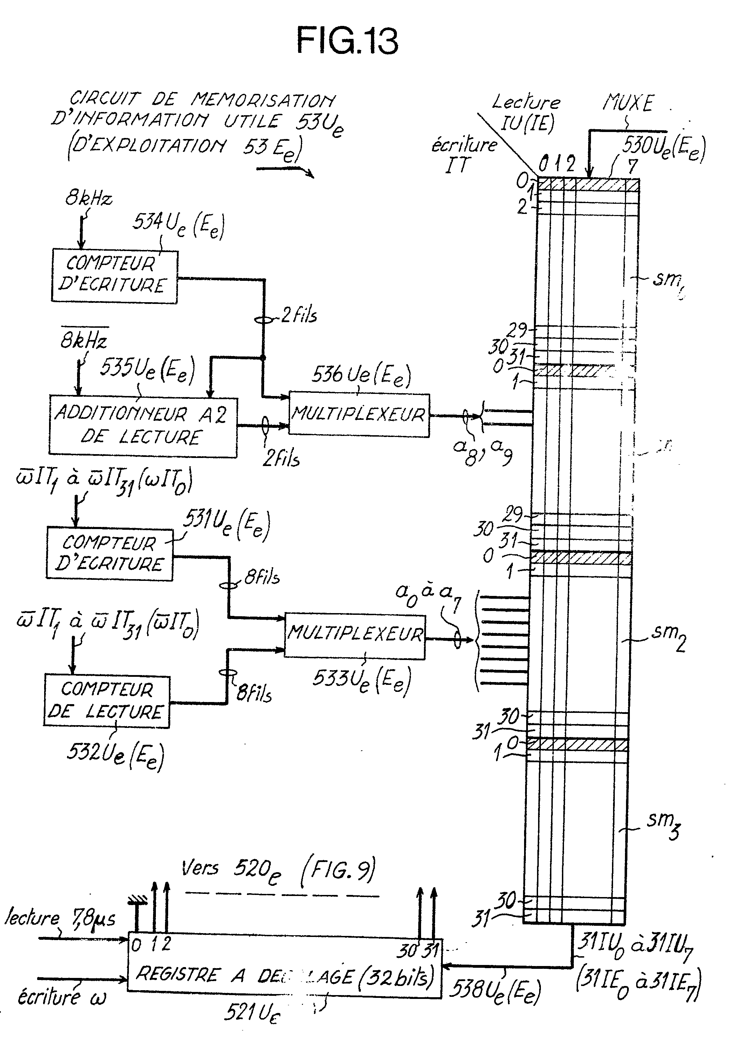

On décrit maintenant la partie d'émission $5_e$ de l'organe de raccordement 5. Les composants essentiels de ses circuits de mémorisation d'information utile 53 $U_e$ et d'exploitation 53 $E_e$ et leur agencement sont analogues à ceux des circuits de mémorisation de la partie réception 53 $U_r$, 53 $E_r$ (Fig. 10). Les composants des circuits 53 $U_e$ et 53 $E_e$ sont également montrés sur la même Fig. 13, dans laquelle les numéros de référence et autres indications relatives à la mémorisation des informations d'exploitation sont mis entre parenthèses.

Le circuit de mémorisation 53 $U_e$, 53 $E_e$ comprend une mémoire vive à 1 024 cellules de 1 bit 530 $U_e$, 530 $E_e$. Elle reçoit à son entrée le multiplex entrant MUXE, à raison d'un bit tous les $\omega$ = 488 ns, et comprend également quatre sous-mémoires identiques $sm_0$ à $sm_3$ afin d'éviter le chevauchement de l'écriture et de la lecture d'une trame de 125 µs. Chaque sous-mémoire $sm_0$ à $sm_3$ est une sous-matrice qui est la transposée de celle d'une sous-mémoire $SM_0$ à $SM_3$ (Fig. 10). En d'autres termes, chaque sous-mémoire $sm_0$ à $sm_3$ comprend 32 lignes d'écriture à 8 bits chacune et 8 colonnes de lecture à 32 bits chacune. Dans les trente et une dernières lignes, les octets d'information utile $IT_1$ à $IT_{31}$ sont écrits pour une sous-mémoire de la mémoire 530 $U_e$. Dans la première ligne, le premier octet $IT_0$ d'information d'exploitation est écrit dans une sous-mémoire 530 $E_e$. Les colonnes sont lues successivement afin de transmettre les bits $IU_0$ des trente et un canaux de liaison, puis les bits $IU_1$, ... jusqu'au bit $IU_7$ de ces canaux, respectivement les bits $IE_0$ à $IE_7$.

Comme à la réception, le circuit 53 $U_e$, 53 $E_e$ comprend, pour l'adressage $a_0$ à $a_7$ des cellules d'une sous-mémoire sm, un compteur d'écriture 531 $U_e$, 531 $E_e$, un compteur de lecture 532 $U_e$, 532 $E_e$ et un multiplexeur d'adresse d'écriture et de lecture 533 $U_e$, 533 $E_e$ et, pour l'adressage $a_8$, $a_9$ des quatre sous-mémoires $sm_0$ à $sm_4$, un compteur d'écriture 534 $U_e$, 534 $E_e$, un circuit de retard en lecture 535 $U_e$, 535 $E_e$ et un second multiplexeur d'adresse d'écriture et de lecture 536 $U_e$, 536 $E_e$. Le circuit de retard 535 $U_e$, 535 $E_e$ introduit un retard constant égal à deux fois la durée d'une trame de 125 µs et est analogue à un simple additionneur modulo 4 qui ajoute deux au compte du compteur d'écriture 534 $U_e$, 534 $E_e$. Les signaux d'horloge appliqués aux compteurs 531 $U_e$, 531 $E_e$ et 532 $U_e$, 532 $E_e$ sont analogues à ceux appliqués aux compteurs correspondants 531 $U_r$, 531 $E_r$ et 532 $U_r$, 532 $E_r$ de la partie de réception à la différence près que, dans le circuit de mémorisation d'information d'exploitation 53 $E_e$, le compteur d'écriture 531 $E_e$ commande l'écriture des informations d'exploitation $IE_0$ à $IE_7$ seulement pendant les 31 $IT_0$ d'une multitrame et que le compteur de lecture 532 $E_e$ les lit pendant les 31 intervalles élémentaires $IT_1$ à $IT_{31}$ d'une trame.

Comme montré aux Figs. 9 et 13, les 31 bits de même rang des intervalles de temps $IT_1$ à $IT_{31}$ resp. $IT_0$ sont délivrés en série par la sortie 538 $U_e$, 538 $E_e$ de la mémoire 530 $U_e$, 530 $E_e$, vers le registre à décalage à 32 étages 521 $U_e$, 521 $E_e$ du circuit de démultiplexage $52_e$. Ces registres sont lus alternativement en parallèle pendant une période de 15,6 µs afin de délivrer les bits IU et IE de même rang multiplexés sur les 31 canaux de liaison $401_e$ à $4 031_e$ de l'interface 40 à travers le registre tampon $520_e$.

La partie d'émission $5_e$ est pourvue également du circuit de détection de mode de canal 56. Il est destiné à déterminer le retard de la lecture des trames d'information utile, qui est égal à 250 µs selon que le canal est en mode-circuit ou en mode-paquet, et à autoriser la transmission des mots d'indication de transition (0 1 0 + adresse de canal). Le retard de 250 µs évite le chevauchement des écriture et lecture d'une trame dans les mémoires d'informations utiles et d'exploitation. Pour les informations utiles appartenant à un canal en mode-paquet, outre la nécessite de l'éviction de ce chevauchement, il est également nécessaire de prévoir un retard de 125 µs pour la détection des transitions fanion/paquet dans le circuit de détection 54.

Le circuit de détection de mode de canal 56 détecte les mots de code à trois bits $C_0$, $C_1$, $C_2$ dans les intervalles $IT_0$ de la multitrame du multiplex entrant MUXE et non pas du multiplex sortant MUXS. Ces conditions sont exigées principalement par la possibilité d'affecter dynamiquement les modes des canaux dans les régies d'abonné. Lorsqu'une régie d'abonné RA modifie le mode d'information utile dans un canal de sa ligne, le réseau de commutation du système multiservice doit alors enregistrer cette nouvelle affectation et en accuser réception par retransmission vers la régie du nouveau mot de code. Dès réception du nouveau mot de code et comparaison dans la régie, la nouvelle affectation est validée, et les transitions du canal en mode-paquet peuvent être détectées. Le circuit de détection de mode de canal 56 fournit donc sélectivement un mot de retard au circuit de mémorisation des informations utiles de la partie réception 53 $U_r$ (Fig. 10) et un mot d'autorisation de transition au circuit de détection de transition fanion/paquet 54 (Fig. 11).

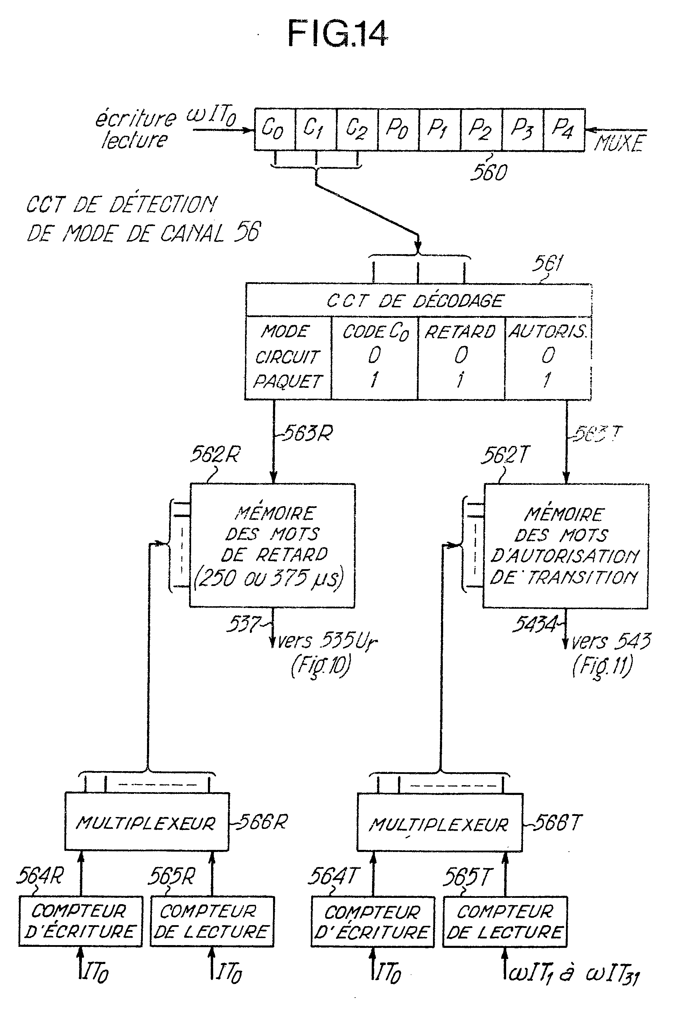

Le circuit de détection de mode de canal 56 est montré en détail à la Fig. 14. Il comprend un registre d'entrée 560 qui enregistre pour chaque trame de 125 $\mu$s, le mot $C_0$ à $C_2$ et $P_0$ à $P_4$ de l'intervalle $IT_0$ appliqué par le multiplexe entrant MUXE. Les trois derniers étages de ce registre contiennent le mot de code $C_0$, $C_1$, $C_2$ et l'applique à l'entrée d'un circuit de décodage 561. Celui-ci contient une mémoire de code selon le tableau II. Le circuit de décodage 561 fait correspondre, selon le tableau montré à la Fig. 14, dans le bloc 561, un bit de retard et un bit de non-autorisation de transition au niveau bas ou un bit de retard et un bit d'autorisation de transition au niveau haut selon que le bit $C_0$ est au niveau logique « 0 » ou « 1 », ou d'une manière générale, selon que le mot d'indication de mode indique le mode-circuit ou le mode-paquet. Pour chaque intervalle $IT_0$ de la multitrame, les mots de retard et d'autorisation de transition sont écrits dans deux mémoires 562 R, 562 T en correspondance au numéro du canal de liaison, via les fils de sortie 563 R, 563 T du circuit de décodage 561. Ces deux mémoires contiennent par exemple 32 cellules à 1 bit. Chacune est commandée en écriture et en lecture par un ensemble classique qui est composé d'un compteur d'écriture 564 R, 564 T, d'un compteur de lecture 565 R, 565 T et d'un multiplexeur 566 R, 566 T délivrant les adresses d'écriture et de lecture au bus d'adressage à 5 fils de la mémoire 562 R, 562 T.

La mémoire des mots de retard 562 R a sa sortie reliée au circuit de retard en lecture 535 $U_r$ (Fig. 10) du circuit de mémorisation d'information utile de la partie de réception, via le bus 537. Le mot de retard indique que le retard entre l'écriture et la lecture d'un octet $IT_1$ à $IT_{31}$ dans la mémoire 530 $U_r$ est égal à 250 $\mu$s (mode-circuit) ou à 375 $\mu$s (mode-paquet). Le compteur de la lecture 565 R ainsi que le compteur d'écriture 564 R et 564 T transmettent des adresses à la fréquence de 8 kHz, égale à celle des trames entrantes et sortantes.

La sortie de la mémoire des mots d'autorisation de transition 562 T délivre un mot d'autorisation sur le fil 5 434 vers le circuit de production des mots d'indication de transition 543 (Fig. 11). Etant donné que les bits sur la liaison 522 $U_r$ entre le circuit de multiplexage 52$_r$ et le circuit de détection 54 sont sérialisés et sont multiplexés par bits de même rang, le compteur de lecture 565 T fournit une adresse de lecture à chaque $\omega = 488$ ns et à la période récurrente de 15,6 $\mu$s pour chaque canal, comme les compteurs d'écriture 531 $U_r$, 531 $E_r$. Comme déjà précisé, si le mot transmis par la mémoire 562 T indique un canal en mode-paquet, le mot lu dans le registre 5 432 (Fig. 11) sera substitué au mot $C_0$ à $C_2$, $A_1$ à $A_4$ lorsqu'un bit d'indication de transition fanion/paquet est délivré par le calculateur 541.

En se reportant à la Fig. 2, il apparaît que, comparativement à la Fig. 1, le réseau de commutation à division du temps 1 selon l'invention a un fonctionnement analogue à celui qui a été divulgué dans la EP-A-0 034 514 en ce qui concerne la commutation d'une voie d'un multiplex MUXS et d'une voie d'un multiplex MUXE. L'une des différences essentielles réside dans le fait que l'indication des transitions fanion/paquet n'est plus transmise par une liaison spécialisée à l'unité de marquage, mais dans un intervalle de temps $IT_0$ de la multitrame.

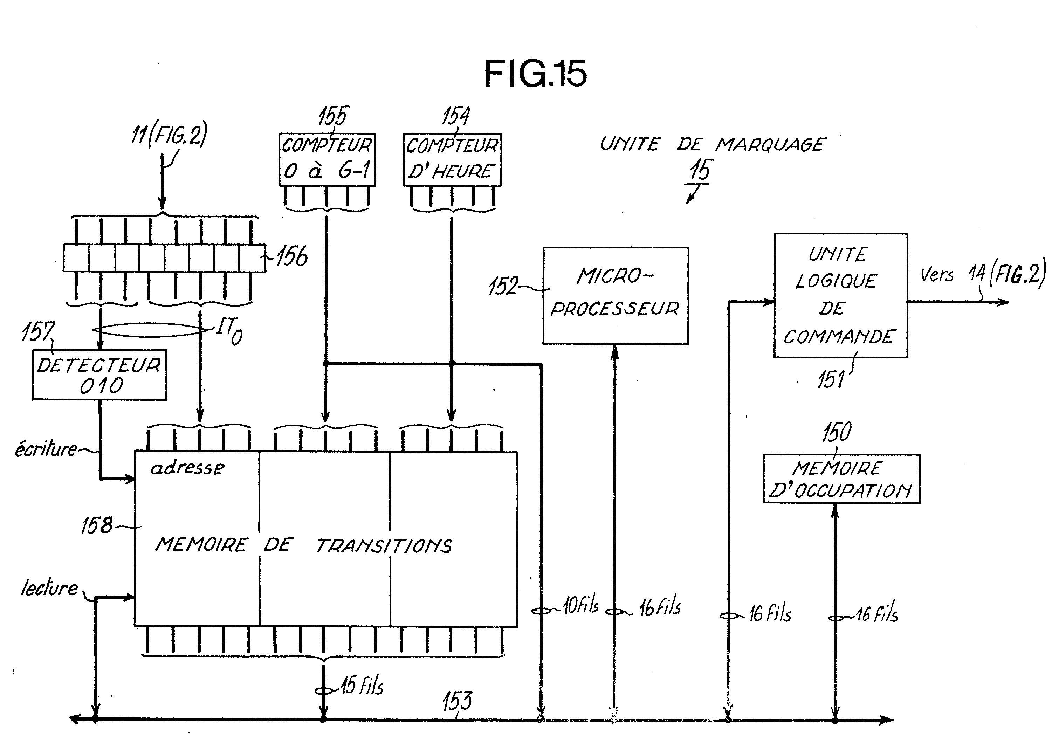

La Fig. 15 montre la partie de l'unité de marquage 15 selon l'invention qui est propre à la commutation des canaux en mode-paquet. Dans cette Fig. 15, on y retrouve classiquement la mémoire d'occupation 150, image de la mémoire tampon 12, et une unité logique de commande 151 qui élaborent les différents signaux de commande des organes du réseau de commutation 1 en vue d'établir les commutations à travers la mémoire de commande 14. L'unité de marquage est structurée classiquement autour d'un microprocesseur 152 qui échange des données, des adresses et des commandes avec les autres composants de l'unité de marquage, à travers un bus général bidirectionnel 153. Ce bus dessert notamment la mémoire d'occupation 150, l'unité logique de commande 151, les bus de sortie de deux compteurs 154 et 155 d'une mémoire de transition 158.

L'unité de marquage 15 comprend également un registre d'entrée à 8 étages 156 et un détecteur du mot du code de transition 0 1 0, 157. Le registre d'entrée 156 est un simple registre tampon qui reçoit en parallèle du supermultiplex 11 du réseau de commutation 1 les octets assignés aux intervalles $IT_0$ des G multitrames multiplexés à partir des multiplex $MUXS_0$ à $MUXS_{G-1}$ dans le multiplexeur 10. Le registre 156 délivre un octet $IT_0$ tous les 125/(G $\times$ 32) $\mu$s sur deux bus de sortie dont l'un à trois fils, correspondant aux 3 premiers étages, applique le mot de code $C_0$, $C_1$, $C_2$ au détecteur 157 et dont l'autre à cinq fils, correspondant aux cinq derniers étages, délivre les bits d'alarme ou d'adresse du canal de liaison sur les cinq premiers fils du bus d'entrée de la mémoire 158. Les autres fils du bus d'entrée de la mémoire 158 sont reliés pour moitié à la sortie du compteur 155 et pour moitié à la sortie du compteur 154.

La mémoire 158 est composée d'une colonne de Q $\times$ G cellules à 15 bits, ce qui permet d'enregistrer Q transitions simultanées pour chaque multiplex $MUXS_0$ à $MUXS_{G-1}$. Statistiquement, il s'avère qu'au plus Q = 2 transitions fanion/paquet sont détectées simultanément dans des canaux relatifs à un même

13

module de raccordement.

L'écriture d'un mot à 15 bits dans la mémoire 158 est commandée par un signal délivré par le détecteur 157 lorsque celui-ci détecte le mot 0 1 0. Dans ce cas, à travers le second bus de sortie du registre 156 est écrit le mot d'adresse du canal dans lequel la transition fanion/paquet avait été détectée par le module de raccordement associé. Simultanément à cette écriture est inscrit dans la même ligne de la mémoire 158 l'adresse du module de raccordement associé 0 à G−1 donnée par le compteur 158 et un mot d'horodatage donné par le compteur d'heure de réception 154.

Le multiprocesseur 152 lit cycliquement pour chaque trame de 125 µs la mémoire 158 afin de commander, par ordre de priorité prédéterminé, les commutations relatives à des canaux en mode-paquet sur lesquels une transition a été détectée. Pour traiter les informations reçues pendant une trame de 125 µs, il ne dispose que de $3 \times 125$ µs, conformément au retard imposé dans les modules de raccordement. Pour chaque ligne non vide lue dans la mémoire 158, le microprocesseur 152 interroge la mémoire d'occupation 150 afin que celle-ci transmette l'identification d'un canal sortant relatif à une ligne LCP reliée au commutateur de paquets. Cette identification comprend les numéros de la ligne libre LCP et du module de raccordement associé. Ces derniers numéros ainsi que ceux lus dans la mémoire 158 sont transmis par le microprocesseur 152 à l'unité logique 151 qui commandera la connexion bidirectionnelle en question dans la mémoire tampon 12. Si aucune ligne LCP est libre, aucune connexion est réalisée, et la régie d'abonné réémettra le paquet ignoré ou perdu une ou plusieurs fois jusqu'à ce que l'un des équipements terminaux du commutateur de paquets CP relié à une ligne libre LCP lui en accuse réception, conformément au protocole d'échange de paquets.

Selon une autre réalisation de l'invention, les modules de raccordement MR du système multiservice sont éloignés du réseau de commutation. Dans ce cas, la base de temps BT du réseau de commutation n'est pas raccordée aux modules de raccordement $RM_0$ à $RM_{G-1}$ et ne synchronise plus les bases de temps 7 des modules de raccordement. Selon cette réalisation, chaque trame à 2 048 kbits/s d'un multiplex MUXS, MUXE est pourvu, en tant que premier octet dans l'intervalle de temps $IT_0$, d'un mot de verrouillage de trame, tel que 0 0 0 0 1 1 1 1. Les principes du fonctionnement du système multiservice décrit précédemment demeurent inchangés, à l'exception des quelques modifications suivantes.

La partie d'émission $5_e$ de chaque module RM comporte, comme montré en traits interrompus courts à la Fig. 9, un circuit de détection de verrouillage de trame $57_e$ qui détecte le mot de verrouillage sur le multiplex entrant MUXE afin de récupérer l'horloge de la base de temps BT et, par suite, de synchroniser localement la base de temps 7 du module de raccordement. Réciproquement, dans la partie réception $5_r$, un générateur de verrouillage $57_r$ est commandé par la base de temps 7 et introduit dans chaque $IT_0$ un mot de verrouillage. Les multiplex $MUXS_0$ à $MUXS_{G-1}$ sont ainsi rendus synchrones dans le multiplexeur 10 d'une manière classique.

Selon cette réalisation, c'est le second intervalle $IT_1$, d'une trame à 2 048 kbit/s qui est assigné aux bits d'exploitation IE ou mots $C_0$ à $C_2$ et $A_0$ à $A_4$ ou $P_0$ à $P_4$. Un module de raccordement ne dessert alors qu'au plus 30 canaux à 64 kbit/s $IT_2$ à $IT_{31}$. La multitrame d'un multiplex à 2 048 kbit/s ne comprend plus que 30 trames de 125 µs, comme montré à la Fig. 8, en référence aux deux colonnes de droite.

Selon les deux réalisations, un générateur et un circuit de détection de mot de verrouillage de multitrame peuvent être prévus. Une multitrame comprend alors 32 resp. 31 trames (première ligne, Fig. 8).

Dans ce cas, pour une multitrame à 32 trames et de durée $32 \times 125$ µs = 4 ms, l'intervalle $IT_0$ de la première trame inclut le mot de verrouillage de multitrame, et les intervalles $IT_0$ des autres trente et une trames $T_1$ à $T_{31}$ incluent les informations d'exploitation IE assignées aux trente et un canaux de liaison 401 à 4 031. Pour une multitrame à 31 trames, les deux premiers intervalles $IT_0$ et $IT_1$ de la première trame $T_0$ incluent les mots de verrouillage de multitrame et de la trame de rang 0, tandis que les deux premiers intervalles $IT_0$ et $IT_1$ des trente autres trames $T_1$ à $T_{30}$ incluent le mot de verrouillage de trame et les informations d'exploitation respectives IE.

La seconde réalisation permet en pratique de raccorder à un même module RM uniquement des lignes d'abonné et/ou des lignes en mode-paquet LP ou LCP. En outre, les lignes en mode-circuit LC reliant le réseau téléphonique peuvent être reliées au réseau de commutation par l'intermédiaire d'un ou plusieurs modules qui leur sont spécialement destinés.

Enfin, il peut être envisagé que certains réseaux extérieurs numériques, téléphoniques ou autres, peuvent être accessibles chacun par une interface spéciale, qui est analogue à un module de raccordement et qui dessert par conséquent le multiplexeur 10 et le démultiplexeur 13 à travers une liaison bidirectionnelle multiplex MUXS-MUXE. Dans ce cas, les modules de raccordement MR du système ne multiplexe et démultiplexent principalement que les canaux convoyés sur des lignes d'abonné LA.

## Revendications

1. Système de commutation numérique à division du temps de canaux à débit prédéterminé en mode-circuit et en mode-paquet convoyant des mots d'information utile à nombre prédéterminé de bits, comprenant G premiers moyens (MR) pour multiplexer chacun un groupe de I canaux de réception ($40_r$)

en un multiplex sortant (MUXS), G premiers moyens (MR) pour démultiplexer chacun un multiplex entrant (MUXE) en un groupe de I canaux d'émission ($40_e$), chaque multiplex ayant une trame récurrente comprenant I mots d'information utile assignés auxdits canaux multiplexés, et des moyens (1) pour commuter bidirectionnellement les canaux en mode-circuit et les canaux en mode-paquet entre les multiplex entrants et sortants, caractérisé en ce que chacun des premiers moyens de multiplexage (MR, $5_r$) comprend des moyens (53 $E_r$) pour introduire dans des intervalles de temps prédéterminés ($IT_0$) de I trames consécutives du multiplex sortant (MUXS) définissant une multitrame, des mots d'information d'exploitation (IE) ayant le nombre prédéterminé de bits respectivement assignés auxdits I canaux de réception ($40_r$), les multiplex entrants convoyant de telles trames et multitrames, et des moyens de détection des transitions fanion/paquet (54) dans les canaux de réception en mode-paquet ($40_r$) pour remplacer le mot d'information d'exploitation (IE) par un mot d'indication de transition (0 1 0) dans une trame du multiplex sortant (MUXS) ayant le même rang dans la multitrame que celui du canal de réception en mode-paquet dans lequel une transition a été détectée et en ce que les moyens de commutation (1) comprennent des moyens (15) recevant les mots d'information d'exploitation (IE) multiplexés dans les multitrames des multiplex sortants (MUXS) pour détecter le mot d'indication de transition (0 1 0) afin de commuter le canal à transition détectée avec un canal en mode-paquet libre d'un multiplex entrant (MUXE).

2. Système conforme à la revendication 1, caractérisé en ce que les moyens de détection des transitions (54) introduisent, conjointement au mot d'indication de transition, l'adresse du canal à transition détectée à la place du mot d'information d'exploitation correspondant dans le multiplex sortant (MUXS) et en ce que les moyens de détection de mot d'indication de transition (15) lisent ladite adresse en réponse à ladite détection du mot d'indication de transition.

3. Système conforme à la revendication 1 ou 2, dans lequel chaque canal bidirectionnel (40) convoie des mots d'information utile et des mots d'information d'exploitation (IE), caractérisé en ce que chaque premier moyen de multiplexage ($5_r$) comprend des moyens ($52_r$) pour multiplexer les I canaux de réception ($40_r$) en un multiplex sortant d'information utile (522 $U_r$) àppliqué à des moyens d'introduction des mots d'information utile (53 $U_r$) dans la trame du multiplex sortant (MUXS) et aux moyens de détection des transitions fanion/paquet (54) et en un multiplex sortant d'information d'exploitation (522 $E_r$) appliqué aux moyens d'introduction des mots d'information d'exploitation (53 $E_r$) et en ce que chaque premier moyen de démultiplexage ($5_e$) comprend des moyens (53 $U_e$) pour séparer les mots d'information utile dans le multiplex entrant (MUXE) en un multiplex entrant d'information utile (538 $U_e$), des moyens (53 $E_e$) pour séparer les mots d'information d'exploitation dans le multiplex entrant (MUXE) en un multiplex entrant d'information d'exploitation (538 $E_e$) et des moyens ($52_e$) pour démultiplexer les multiplex entrants d'informations utiles et d'exploitation (538 $U_e$, 538 $E_e$) en lesdits canaux d'émission ($40_e$).

4. Système conforme à la revendication 3, caractérisé en ce que les mots d'information d'exploitation de chaque canal comprennent un mot d'indication de mode-circuit ou de mode-paquet ($C_0$ à $C_3$).

5. Système conforme à la revendication 4, caractérisé en ce que le mot d'indication de mode-circuit ou de mode-paquet indique également le type de dispositif ayant émis les informations utiles, tel qu'une régie d'abonné, un réseau de commutation externe en mode-circuit ou en mode-paquet ou un commutateur de paquets.

6. Système conforme à la revendication 4 ou 5, caractérisé en ce que chaque premier moyen de démultiplexage ($5_r$) comprend des moyens (56) reliés au multiplex entrant (MUXE) ou sortant (MUXS) pour détecter le mot d'indication de mode afin de commander, en réponse à la détection du mot d'indication de mode-paquet dans un mot d'information d'exploitation d'un canal d'émission du multiplex entrant ou de réception du multiplex sortant, le remplacement du mot d'indication de mode ($C_0$ à $C_2$) dans un mot d'information d'exploitation du canal de réception correspondant du multiplex sortant (MUXS) des premiers moyens de multiplexage ($5_e$) du même groupe par le mot d'indication de transition (0 1 0) dès la détection d'une transition dans le canal de réception par les moyens de détection de transition (54).

7. Système conforme à l'une des revendications 3 à 6, caractérisé en ce que, dans chaque canal, les mots d'information utile (IU) et d'exploitation (IE) sont réunis par paire et multiplexés bit à bit en une trame, et les multiplex sortant et entrant d'information utile (522 $U_r$, 538 $U_r$) convoient en ledit nombre prédéterminé des séries récurrentes de I bits de même rang d'information utile (IU) pendant que les multiplex sortant et entrant d'information d'exploitation (522 $U_r$, 538 $E_r$) convoient en ledit nombre prédéterminé des séries récurrentes de I bits de même rang des mots d'information d'exploitation (IE).

8. Système conforme à la revendication 7, caractérisé en ce que les moyens d'introduction des mots d'information utile (53 $U_r$) et d'information d'exploitation (53 $E_r$) dans le multiplex sortant (MUXS) comprennent chacun une mémoire (530, Fig. 10) ayant au moins deux sous-mémoires (sm), lesdites séries de bits entrantes en ledit nombre prédéterminé étant écrites ligne par ligne dans l'une des sous-mémoires pendant une trame et les I mots d'information utile, resp. le mot d'information d'exploitation du canal de réception de même rang dans la trame que celui de la trame dans la multitrame, étant lus colonne par colonne dans une autre sous-mémoire, et les moyens de séparation des mots d'information utile (53 $U_e$) et d'information d'exploitation (53 $E_e$) dans le multiplex entrant (MUXE) comprennent chacun une mémoire (530, Fig. 13) ayant au moins deux sous-mémoires (sm), les I mots d'information

15

utile, resp. le mot d'information d'exploitation du canal d'émission de même rang dans la trame que celui de la trame dans la multitrame, étant écrits ligne par ligne dans l'une des sous-mémoires (sm) pendant la trame et lesdites séries de bits sortantes en ledit nombre prédéterminé étant lues colonne par colonne dans une autre sous-mémoire (sm), et inversement pendant la trame suivante ou une trame de rang prédéterminé.

9. Système conforme aux revendications 6 et 8, caractérisé en ce que les moyens de détection du mot d'indication de mode (56) comprennent des moyens (562 R, 537) pour imposer un retard d'au moins une trame consécutive entre l'écriture et la lecture d'un mot d'information utile d'un canal en mode-paquet dans la mémoire (530 $U_r$) des moyens d'introduction d'information utile (53 $U_r$) en réponse à la détection du mot d'indication en mode-paquet dans le canal d'émission correspondant, et en ce que ladite mémoire (530 $U_r$) des moyens d'introduction utile comprend au moins trois sous-mémoires (SM) qui sont écrites cycliquement pendant trois trames consécutives et dont les colonnes sont lues avec un retard d'au moins une trame ou de deux trames selon que la colonne lue concerne un mot de canal en mode-circuit ou un mot de canal en mode-paquet.

10. Système conforme à l'une des revendications 1 à 9, dans lequel chaque paire de premiers moyens de multiplexage et de démultiplexage d'un groupe de I canaux (MR) sont reliés à travers des seconds moyens de multiplexage et de démultiplexage (3) à des lignes numériques bidirectionnelles, mono- ou multicanales d'information en mode-circuit et en mode-paquet, la somme des canaux des lignes étant au plus égale à I, caractérisé en ce que dans chaque canal de ligne sont convoyés, outre un mot d'information utile (IU), un mot d'adresse (MA) du canal et au moins un bit d'un mot d'information d'exploitation (IE) et en ce que les seconds moyens de multiplexage et de démultiplexage (3) comprennent pour chaque ligne (L), à la réception, des moyens ($33_r$) pour détecter les mots d'adresse (MA) des canaux, des moyens ($34_r$) pour démultiplexer les mots d'information utile (IU) et les bits d'information d'exploitation (IE) à leurs débits respectifs pour chaque canal et des moyens ($35_r$) pour multiplexer les informations utiles et les informations d'exploitation en un canal de réception de la ligne ($40_r$) dans lequel les mots d'informations utile et d'exploitation sont multiplexés bit à bit et, à l'émission, des moyens ($35_e$) pour démultiplexer chaque canal d'émission de la ligne ($40_e$) en les mots d'information utile et les bits d'information d'exploitation à leurs débits respectifs, des moyens ($34_e$) pour multiplexer les mots d'information utile et les bits d'information d'exploitation à leurs débits respectifs de tous les canaux en les canaux de la ligne, et des moyens ($33_e$) pour insérer à la sortie des derniers moyens de multiplexage ($34_e$) les mots d'adresse dans les canaux multiplexés.

11. Système conforme à la revendication 10, caractérisé en ce que les seconds moyens de multiplexage et de démultiplexage (3) de chaque ligne comprennent entre la ligne (L) et les moyens de détection et d'insertion de mot d'adresse de canal (33) des moyens connus (32) de connexion à la ligne et d'adaptation électrique au mode de transmission duplex ou semi-duplex de la ligne.

12. Système conforme à la revendication 11, caractérisé en ce que, lorsque la ligne est en mode semi-duplex ou dit à l'alternat, chaque cycle élémentaire à l'alternat consiste à émettre puis à recevoir le bloc d'information (MA, IE, IU) d'un seul canal, le cycle total à l'alternat comportant un nombre de cycle élémentaire égal au nombre (K) de canaux multiplexés dans la ligne.

13. Système conforme à l'une des revendications 10 à 12, caractérisé en ce que dans chaque canal sont paquetisés au moins deux mots d'information utile (Fig. 3).

14. Système conforme à l'une des revendications 10 à 13, caractérisé en ce qu'à chaque premier moyen de multiplexage et de démultiplexage (5) peuvent être reliés des seconds moyens de multiplexage et de démultiplexage (3) relatifs à au moins une ligne à l'alternat et/ou moins une ligne en duplex, et à au moins une ligne monocanale et/ou au moins une ligne à deux ou plus de canaux.

15. Système conforme à l'une des revendications 10 à 14, caractérisé en ce que chaque ensemble (RM) de premiers et seconds moyens de multiplexage et de démultiplexage (3) relatifs à une paire de multiplex entrant et sortant (MUXE-MUXR) sont logés dans un module dans lequel sont prévus, du côté des lignes, une colonne de I logements correspondant chacun à des seconds moyens de multiplexage et de démultiplexage pour ligne monocanale, des seconds moyens de multiplexage et de démultiplexage pour ligne à K canaux occupant tout ou partie de K logements adjacents.

16. Système conforme à l'une des revendications 10 à 15, caractérisé en ce que les débits des informations utiles et d'informations dans un canal de ligne sont dans un rapport de 1/8 ou de 1/16.

17. Système conforme à l'une des revendications 1 à 16, caractérisé en ce que les premiers moyens de multiplexage et de démultiplexage (MR, 5) de chaque groupe comprennent des moyens ($57_r$) pour introduire un mot de verrouillage dans chaque trame du multiplex sortant (MUXS) et des moyens ($57_e$) pour détecter dans chaque trame du multiplex entrant (MUXE) un mot de verrouillage afin de synchroniser localement la base de temps (7) des premiers moyens de multiplexage et de démultiplexage avec celle des moyens de commutation (1), chaque trame des multiplex entrants et sortants comprenant un mot de verrouillage, un mot d'informations d'exploitation et I mots d'informations utiles.

**Claims**

1. Time division digital switching system for circuit mode and packet mode channels with a predetermined rate conveying useful information words with a predetermined number of bits, said system comprising G first means (MR) for each multiplexing a group of I reception channels ($40_r$) into an outgoing multiplex (MUXS), G first means (MR) for each demultiplexing an incoming multiplex (MUXE) into a group of I emission channels ($40_e$), each multiplex having a recurrent frame including I useful information words assigned to said multiplexed channels, and means (1) for bidirectionally switching the circuit mode channels and the packet mode channels between the incoming and outgoing multiplexes, characterized in that each of the first multiplexing means (MR, $5_r$) comprises means (53 $E_r$) for introducing into predetermined time intervals ($IT_0$) of I consecutive frames of the outgoing multiplex (MUXS) defining a multiframe, working information words (IE) having the predetermined number of bits respectively assigned to said I reception channels ($40_r$), the incoming multiplexes also conveying analogous frames and multiframes, and means for detecting flag/packet transitions (54) in the packet mode reception channels ($40_r$) to replace the working information word (IE) by a transition indicating word (0 1 0) in a frame of the outgoing multiplex (MUXS) having the same rank in the multiframe as that of the packet mode reception channel in which a transition has been detected, and in that the switching means (1) comprise means (15) receiving the working information words (IE) multiplexed in the multiframes of the outgoing multiplexes (MUXS) for detecting the transition indicating word (0 1 0) thereby switching the channel with detected transition over to a free packet mode channel in an incoming multiplex (MUXE).

2. System according to claim 1, characterized in that the transition detecting means (54) introduce, in conjunction with the transition indicating word, the address of the channel in which transition is detected, in place of the corresponding working information word in the outgoing multiplex (MUXS) and in that the transition indicating word detecting means (15) read said address in response to said detection of the transition indicating word.

3. System according to claim 1 or 2, wherein each bidirectional channel (40) conveys useful information words and working information words (IE), characterized in that each first multiplexing means ($5_r$) comprises means ($52_r$) for multiplexing the I reception channels ($40_r$) into an outgoing useful information multiplex (522 $U_r$) applied to means (53 $U_r$) for introducing useful information words into the frame of the outgoing multiplex (MUXS) and to the flag/packet transition detecting means (54), and into an outgoing working information multiplex (522 $E_r$) applied to the working information word introducing means (53 $E_r$) and in that each first demultiplexing means ($5_e$) comprises means (53 $U_e$) for separating the useful information words within the incoming multiplex (MUXE) into an incoming useful information multiplex (538 $E_e$), means (53 $E_e$) for separating the working information words within the incoming multiplex (MUXE) into an incoming working information multiplex (538 $E_e$), and means ($52_e$) for demultiplexing the incoming useful and working information multiplexes (538 $U_e$, 538 $E_e$) into said emission channels ($40_e$).

4. System according to claim 3, characterized in that the working information words for each channel comprise a circuit mode or packet mode indicating word ($C_0$ to $C_3$).

5. System according to claim 4, characterized in that the circuit mode or packet mode indicating word also indicates the type of device having emitted the useful informations such as a subscriber equipment, a circuit mode or packet mode outside switching network or a packet switching unit.

6. System according to claim 4 or 5, characterized in that each first demultiplexing means ($5_r$) comprises means (56) connected to the incoming (MUXE) or outgoing (MUXS) multiplex for detecting the mode indicating word so as to control, in response to the detection of the packet mode indicating word in a working information word of an incoming multiplex emission or outgoing multiplex reception channel, the replacement of the mode indicating word ($C_0$ to $C_2$) in a working information word of the corresponding reception channel in the outgoing multiplex (MUXS) of the first multiplexing means ($5_e$) of the same group by the transition indicating word (0 1 0) upon detection of a transition in the reception channel by the transition detecting means (54).

7. System according to any one of claims 3 to 6, characterized in that, in each channel, the useful (IU) and working (IE) information words are grouped into pairs and multiplexed bit-by-bit in a frame, and the useful information outgoing and incoming multiplexes (522 $U_r$, 538 $U_e$) convey in said predetermined number, recurrent series of I same-rank useful information bits (IU) whilst the working information outgoing and incoming multiplexes (522 $E_r$, 538 $E_e$) convey in said predetermined number, recurrent series of I same-rank working information bits (IE).

8. System according to claim 7, characterized in that the means for introducing useful information words (53 $U_r$) and working information words (53 $E_r$) into the outgoing multiplex (MUXS) each comprise a memory (530, Fig. 10) having at least two sub-memories (sm), said incoming bit series at said predetermined number being written line by line in one of the sub-memories during a frame, and the I useful information words, respectively the working information word of the reception channel having the same rank in the frame as that of the frame in the multiframe, being read column by column in another sub-memory, and the means for separating the useful information words (53 $U_e$) and working information words (53 $E_e$) in the incoming multiplex (MUXE) each comprise a memory (530, Fig. 13) having at least two sub-memories (sm), the I useful information words, respectively the working information word of the emission channel having the same rank in the frame as that of the frame in the multiframe, being written line by line in one of the sub-memories (sm) during the frame and said outgoing bit series at said

17

predetermined number being read column by column in another sub-memory (sm), and reciprocally during the following frame or a frame having a predetermined rank.

9. System according to claims 6 and 8, characterized in that the mode indicating word detecting means (56) comprise means (562 R, 537) for imposing a delay of at least one consecutive frame between the writing and reading times for a useful information word of a packet mode channel in the memory (530 U$_r$) of the useful information introducing means (53$_r$) in response to the detection of said packet mode indicating word in the corresponding emission channel, and in that said memory (530 U$_r$) of the useful information introducing means comprises at least three sub-memories (SM) which are cyclically written during three consecutive frames and whose columns are read with a delay of at least one or two frames depending on whether the column read relates to a circuit mode channel word or a packet mode channel word.

10. System according to any one of claims 1 to 9, wherein each pair of first multiplexing and demultiplexing means (MR) relating to a group of I channels are linked via second multiplexing and demulteplexing means (3) to circuit mode and packet mode information mono- or multi-channel bidirectional digital lines, the sum of the channels in the lines being equal at the most to I, characterized in that in each line channel are conveyed, besides a useful information word (IU), an address word (MA) of the channel and at least one bit of a working information word (IE), and in that the second multiplexing and demultiplexing means (3) comprise, for each line (L), at the reception end, means (33$_r$) for detecting the channel address words (MA), means (34$_r$) for demultiplexing the useful information words (IU) and the working information bits (IE) at their respective rates for each channel, and means (35$_r$) for multiplexing the useful informations and the working informations into a reception channel of the line (40$_r$) in which the useful and working information words are multiplexed bit by bit and, at the emission end, means (35$_e$) for demultiplexing each emission channel of the line (40$_e$) into the useful information bits and the working information bits at their respective rates, means (34$_e$) for multiplexing the useful information words and the working information bits at their respective rates of all the channels into the channels of the line, and means (33$_e$) for inserting the address words in the multiplexed channels at the output of the latter multiplexing means (34$_e$).

11. System according to claim 10, characterized in that the second multiplexing and demultiplexing means (3) of each line comprise known means (32) between the line (L) and the channel address word detecting and inserting means (33) for connection to the line and for electrical matching with the duplex or half-duplex transmission mode of the line.

12. System according to claim 11, characterized in that, when the line is in the half-duplex mode, each elementary cycle of the half-duplex mode consists of emitting and then receiving the information block (MA, IE, IU) of a single channel, the whole half-duplex cycle comprising an elementary cycle number equal to the number (K) of the multiplexed channels in the line.

13. System according to any one of claims 10 to 12, characterized in that at least two useful information words are packetized in each channel (Fig. 3).

14. System according to any one of claims 10 to 13, characterized in that to each first multiplexing and demultiplexing means (5) can be connected second multiplexing and demultiplexing means (3) related to at least one half-duplex line and/or at least one duplex line, and to at least one monochannel line and or at least one line with two or more channels.

15. System according to any one of claims 10 to 14, characterized in that each assembly (RM) of first and second multiplexing and demultiplexing means (3) related to a pair of incoming and outgoing multiplexes (MUXE-MUXR) are lodged in a module in which provisions are made, on the line side, for a column with I locations each corresponding to second multiplexing and demultiplexing means for monochannel line, second multiplexing and demultiplexing means for a line with K channels occupying all or part of K adjacent locations.

16. System according to any one of claims 10 to 15, characterized in that the useful information and working information rates in a line channel are in a ratio of 1/8 or 1/16.

17. System according to any one of claims 1 to 16, characterized in that the first multiplexing and demultiplexing means (MR, 5) of each group comprises means (57$_r$) for introducing an alignment word in each frame of the outgoing multiplex (MUXS) and means (57$_e$) for detecting an alignment word in each frame of the incoming multiplex (MUXE) thereby synchronizing locally the time base (7) of the first multiplexing and demultiplexing means with that of the switching means (1), each frame of the incoming and outgoing multiplexes including an alignment word, a working information word and I useful information words.

## Ansprüche

1. Digitales Zeitmultiplexvermittlungssystem für mit vorbestimmter Bitrate im Wahlbetrieb und im Paketbetrieb arbeitende Kanäle, welche Nutzinformation in Wörtern mit vorbestimmter Bitzahl übertragen, wobei das System G erste Multiplexeinrichtungen (MR) je für eine Gruppe von I Empfangskanälen (40$_r$) in einen Multiplexausgangskanal (MUXS), G erste Demultiplexeinrichtungen (MR) je für einen Multiplexeingangskanal (MUXE) in eine Gruppe von I Sendekanälen (40$_e$) umfaßt und jeder Multiplexkanal einen

**0 057 628**

sich wiederholenden Bitzung von I den gemultiplexten Kanälen zugewiesenen Nutzinformationswörtern hat, und wobei das System eine Umschalteinrichtung (1) zum bidirektionellen Kommutieren der Wahlbetrieb-Kanäle und der Paketbetrieb-Kanäle zwischen den Multiplexeingangs- und -ausgangskanälen aufweist, dadurch gekennzeichnet, daß jede der ersten Multiplexeinrichtungen (MR, $5_r$) eine Einschiebeeinrichtung (53 $E_r$) aufweist, welche Betriebsinformationswörter (IE) mit vorbestimmter, jeweils den I Empfangskanälen ($40_r$) zugeordneter Bitzahl in vorbestimmte Zeitintervalle ($IT_0$) von I aufeinanderfolgenden, einen Mehrfachbitzug definierenden Bitzügen des Multiplexausgangskanals (MUXS) einfügt, wobei die Multiplexeingangskanäle diese Bitzüge und Mehrfachbitzüge übertragen, sowie eine Detektoreinrichtung (54) für die Übergänge Signal/Paket in den im Paketbetrieb arbeitenden Empfangskanälen ($40_r$) umfaßt, um das Betriebsinformationswort (IE) durch ein Übergangs-Anzeigewort (0 1 0) in einem Bitzug des Multiplexausgangskanals (MUXS) zu ersetzen, der den gleichen Rang in dem Mehrfachbitzug hat wie der Rang desjenigen im Paketbetrieb arbeitenden Empfangskanals, in welchem ein Übergang festgestellt worden ist, und daß die Umschalteinrichtung (1) eine Empfangseinrichtung (15) für die Betriebsinformationswörter (IE) aufweist, die in den Mehrfachbitzügen des Multiplexausgangskanals (MUXS) gemultiplext sind, um das Übergangsanzeigewort (0 1 0) festzustellen, damit der Kanal, in dem der Übergang festgestellt worden ist, mit einem freien, im Paketbetrieb arbeitenden Kanal eines Multiplexeingangskanals (MUXE) umgeschaltet wird.

2. System nach Anspruch 1, dadurch gekennzeichnet, daß die Detektoreinrichtung (54) in Verbindung mit dem Übergangsanzeigewort die Adresse des Kanals mit festgestelltem Übergang anstelle des entsprechenden Betriebsinformationswortes in den Multiplexausgangskanal (MUXS) einfügt, und daß die Detektoreinrichtung für das Übergangsanzeigewort (15) diese Adresse in Abhängigkeit von der Feststellung des Übergangsanzeigewortes liest.

3. System nach Anspruch 1 oder 2, bei dem jeder Zweirichtungskanal (40) Nutzinformationswörter und Betriebsinformationswörter (IE) überträgt, dadurch gekennzeichnet, daß jede erste Multiplexeinrichtung ($5_r$) Mittel ($52_r$) zum Multiplexen der I Empfangskanäle ($40_r$) in einen Multiplexausgangskanal für Nutzinformation ($522 U_r$) umfaßt, der einer Einschiebeeinrichtung für Nutzinformationswörter (53 $U_r$) in den Bitzung des Multiplexausgangskanals (MUXS) sowie der Detektoreinrichtung (54) füt Signal/Paket-Übergänge zugeführt ist, sowie für das Multiplexen der I Empfangskanäle ($40_r$) in einen Multiplexausgangskanal ($522 E_r$) für Betriebsinformation, der der Einschiebeeinrichtung für Betriebsinformation (53 $E_r$) zugeführt ist, und daß jede erste Demultiplexeinrichtung ($5_e$) Mittel (53 $U_e$) zum Trennen der Nutzinformationswörter in dem Multiplexeingangskanal (MUXE) in einen Multiplexeingagskanal (538 $U_e$) mit Nutzinformation, sowie Mittel (53 $E_e$) zum Trennen der Betriebsinformationswörter in dem Multiplexeingangskanal (MUXE) in einen Multiplexeingangskanal (538 $E_e$) für Betriebsinformation und eine Demultiplexeinrichtung ($52_e$) für das Demultiplexen der Multiplexeingangskanäle für Nutzinformation und Betriebsinformation (538 $U_e$, 538 $E_e$) in die Sendekanäle ($40_e$) umfaßt.

4. System nach Anspruch 3, dadurch gekennzeichnet, daß die Betriebsinformationswörter jedes Kanals ein Anzeigewort für den Wahlbetrieb oder den Paketbetrieb ($C_0$ bis $C_3$) enthalten.

5. System nach Anspruch 4, dadurch gekennzeichnet, daß das Anzeigewort für Wahlbetrieb oder Paketbetrieb zusätzlich die Art des Senders der Nutzinformation, wie beispielsweise eine Teilnehmerverwaltung, ein äußeres Schaltnetz für Wahl- oder Paketbetrieb, oder eine Umschalteinrichtung für Datenpakete, anzeigt.

6. System nach Anspruch 4 oder 5, dadurch gekennzeichnet, daß jede erste Demultiplexeinrichtung ($5_r$) einen mit dem Multiplexeingangskanal (MUXE) oder dem Multiplexausgangskanal (MUXS) verbundenen Anzeigewortdetektor (56) umfaßt, um in Abhängigkeit von der Feststellung des Paketanzeigewortes in einem Betriebsinformationswort eines Sendekanals des Multiplexeingangskanals oder des Empfangskanals des Multiplexausgangskanals den Ersatz des Betriebsanzeigewortes ($C_0$ bis $C_2$) in einem Betriebsinformationswort des entsprechenden Empfangskanals des Multiplexausgangskanals (MUXS) der ersten Multiplexeinrichtung ($5_e$) der gleichen Gruppe durch das Übergangsanzeigewort (0 1 0) zu steuern, sobald ein Übergang in dem Empfangskanal durch die Detektoreinrichtung (54) festgestellt worden ist.

7. System nach einem der Ansprüche 3 bis 6, dadurch gekennzeichnet, daß in jedem Kanal die Nutzinformationswörter (IU) und die Betriebsinformationswörter (IE) paarweise vereinigt und bitweise in einen Bitzug gemultiplext sind, und daß die Multiplexeingangskanäle und Multiplexausgangskanäle der Nutzinformation ($522 U_r$, 538 $U_e$) in der vorbestimmten Anzahl sich wiederholende Reihen von I Bits des gleichen Rangs der Nutzinformation (IU) übertragen, während die Multiplexausgangskanäle und Multiplexeingangskanäle für Betriebsinformation ($522 E_r$, 538 $E_e$) in der vorbestimmten Anzahl sich wiederholende Reihen von I Bits des gleichen Ranges der Betriebsinformationswörter (IE) übertragen.

8. System nach Anspruch 7, dadurch gekennzeichnet, daß die Einschiebeeinrichtungen für Nutzinformationswörter (53 $U_r$) und der Betriebsinformationswörter (53 $E_r$) in dem Multiplexausgangskanal (MUXS) je einen Speicher (530, Fig. 10) mit mindestens zwei Unterspeichern (sm) umfassen, wobei die ankommenden Bitreihen in der vorgeschriebenen Anzahl zeilenweise in einen der Unterspeicher während eines Bitzuges eingeschrieben werden und die I Nutzinformationswörter bzw. das Betriebsinformationswort des Empfangskanals des gleichen Rangs in dem Bitzug wie der Rang des Bitzuges in dem Mehrfach-Bitzug spaltenweise in einem anderen Unterspeicher gelesen werden, und daß die Trenneinrichtung für die Nutzinformationswörter (53 $U_e$) und der Betriebsinformationswörter (53 $E_e$)

19

in dem Multiplexeingangskanal (MUXE) je einen Speicher (530, Fig. 13) mit mindestens zwei Unterspeichern (sm) umfassen, wobei die I Nutzinformationswörter bzw. das Betriebsinformationswort des Sendekanals vom gleichen Rang in dem Bitzung wie der Rang des Bitzugs in dem Mehrfachbitzug zeilenweise in einen der Unterspeicher (sm) während des Bitzuges eingeschrieben werden und die abgehenden Bitreihen in der vorbestimmten Anzahl spaltenweise in einem anderen Unterspeicher (sm) gelesen werden, und umgekehrt während des folgenden Bitzuges oder einem Bitzug vorbestimmten Ranges.

9. System nach Ansprüche 6 und 8, dadurch gekennzeichnet, daß der Betriebsanzeigewortdetektor (56) Verzögerungseinrichtungen (562 R, 537) für eine Verzögerung von mindestens einem nachfolgenden Bitzug zwischen dem Einschreiben und dem Lesen des Nutzinformationswortes eines Paketbetriebskanals in den Speicher (530 $U_r$) der Einschiebeeinrichtung (53 $U_r$) für Nutzinformation in Abhängigkeit von der Feststellung des Paketbetriebsanzeigewortes in dem entsprechenden Sendekanal umfaßt, und daß der Speicher (530 $U_r$) der Einschiebeeinrichtung für Nutzinformation wenigstens drei Unterspeicher (SM) aufweist, in welche zyklisch während dreier aufeinanderfolgender Bitzüge eingeschrieben wird und deren Spalten mit einer Verzögerung von wenigstens einem Bitzug oder von zwei Bitzügen gelesen werden, je nachdem die gelesenen Spalte ein Wort für einen Wahlbetriebskanal oder ein Wort für einen Paketbetriebskanal betrifft.

10. System nach einem der Ansprüche 1 bis 9, bei dem jedes Paar der ersten Multiplexeinrichtung und Demultiplexeinrichtung einer Gruppe von I Kanälen (MR) über eine zweite Multiplexeinrichtung und Demultiplexeinrichtung (3) mit ein- oder mehrkanaligen, digitalen Zweiwegleitungen für Wahlinformation oder Paketinformation verbunden ist, wobei die Gesamtzahl der Leitungskanäle höchstens gleich I ist, dadurch gekennzeichnet, daß in jedem Leitungskanal außer einem Nutzinformationswort (IU) ein Adressenwort (MA) des Kanals und wenigstens ein Bit eines Betriebsinformationswortes (IE) übertragen wird, und daß die zweite Multiplexeinrichtung und Demultiplexeinrichtung (3) für jede Leitung (L) am Empfang Detektoreinrichtungen (33$_r$) für Adressenwörter (MA) der Kanäle, Demultiplexeinrichtungen (34$_r$) zum Demultiplexen der Nutzinformationswörter und der Betriebsinformationsbits (IE) mit ihrer jeweiligen Bitrate für jeden Kanal und einen Multiplexer (35$_r$) zum Multiplexen der Nutzinformationen und der Betriebsinformationen in einen Empfangskanal der Leitung (40$_r$) enthält, in welchem die Nutzinformationswörter und die Betriebsinformationswörter bitweise gemultiplext werden, sowie an der Sendeseite Demultiplexeinrichtungen (35$_e$) zum Demultiplexen jedes Sendekanals der Leitung (40$_e$) in die Nutzinformationswörter und die Betriebsinformationsbits mit ihrer jeweiligen Bitrate, Multiplexeinrichtungen (34$_e$) zum Multiplexen der Nutzinformationswörter und der Betriebsinformationsbits mit ihren jeweiligen Bitraten in allen Kanälen in die Kanäle der Leitungen, sowie Einfügeeinrichtungen (33$_e$) zum Einfügen der Adressenwörter in die demultiplexten Kanäle am Ausgang des letztgenannten Multiplexers (34$_e$) umfaßt.

11. System nach Anspruch 10, dadurch gekennzeichnet, daß die zweiten Multiplex- und Demultiplexeinrichtungen (3) jeder Leitung eine zwischen der Leitung (L) und den Detektor- und Einfügeeinrichtungen für das Kanaladressenwort (33) an sich bekannten Anschlußeinrichtungen (32) zum Anschluß und zur elektrischen Anpassung an die Leitung für die Duplex- oder Semiduplexübertragung auf der Leitung umfassen.

12. System nach Anspruch 11, dadurch gekennzeichnet, daß bei Semiduplexbetrieb oder Wechselbetrieb der Leitung jeder Elementarwechselzyklus darin besteht, daß der Informationsblock (MA, IE IU) eines einzigen Kanals gesendet und dann empfangen wird, wobei der Gesamtwechselzyklus eine Anzahl von Elementarzyklen umfaßt, die gleich der Anzahl (K) der in einer Leitung gemultiplexten Kanäle ist.

13. System nach einem der Ansprüche 10 bis 12, dadurch gekennzeichnet, daß in jedem Kanal wenigstens zwei Nutzinformationswörter paketisiert sind (Fig. 3).

14. System nach einem der Ansprüche 10 bis 13, dadurch gekennzeichnet, daß mit jeder ersten Multiplex- und Demultiplexeinrichtung (5) zweite Multiplex- und Demultiplexeinrichtungen (3) für mindestens eine Wechselleitung und/oder mindestens eine Duplexleitung sowie mindestens eine einkanalige Leitung und/oder mindestens eine Leitung mit zwei oder mehr Kanälen verbunden sein können.

15. System nach einem der Ansprüche 10 bis 14, dadurch gekennzeichnet, daß jede Anordnung (RM) der ersten und zweiten Multiplex- und Demultiplexeinrichtungen (3) für ein Paar von Multiplexeingangs- und Multiplexausgangskanälen (MUXE-MUXR) in einem Modul beherbergt sind, in welchem leitungsseitig eine Spalte von I Stellen, die jeden zweiten Multiplex- und Demultiplexeinrichtungen für eine einkanalige Leitung entsprechen, zweite Multiplex- und Demultiplexeinrichtungen für eine Leitung mit K Kanälen, die ganz oder teilweise die K benachbarten Stellen besitzen, vorgesehen sind.

16. System nach einem der Ansprüche 10 bis 15, dadurch gekennzeichnet, daß die Bitraten der Nutzinformationen und der Betriebsinformation in einem Kanal der Leitung in einem Verhältnis 1/8 oder 1/16 stehen.

17. System nach einem der Ansprüche 1 bis 16, dadurch gekennzeichnet, daß die ersten Multiplex und Demultiplexeinrichtungen (MR, 5) jeder Gruppe Verriegelungseinrichtungen (57$_r$) für die Einfügung eines Verriegelungswortes in jeden Bitzug des Multiplexausgangskanals (MUXS) und eine Detektoreinrichtung (57$_e$) zum Feststellen eines Verriegelungswortes in jedem Bitzug des Multiplexeingangskanals (MUXE) umfassen, um lokal den Taktgeber (7) der ersten Multiplex- und Demultiplexeinrichtungen mit den Umschalteinrichtungen (1) zu synchronisieren, wobei jeder Bitzug der Multiplexeingangskanäle und Multiplexausgangskanäle ein Verriegelungswort, ein Betriebsinformationswort und I Nutzinformationswörter enthält.

FIG.1

REGIES D'ABONNÉS

RA — LA — 128k bit/s — E.I.A
RA — LA — E.I.A
RA — 128k bit/s — E.I.A
RA — LA — E.I.A

RE — INTERFACES D'ADAPTATION AUX RÉSEAUX EXTERIEURS

64kbit/s — E.I.C — LC
E.I.C
E.I.C
64kbit/s — E.I.P — LP
E.I.P
E.I.P

COMMUTATEUR DE PAQUETS

De ou vers réseau de transmission de paquets

CP — BD — 64kbit/s — LCP — E.I.P.C. — E.I.P.C.

BASE DE TEMPS — BT

MULT.

MUXS$_0$ MUXS$_1$ MUXS$_{G-1}$ RÉSEAU DE COMMUTATION

10
11
1 — 8 fils — M T — 12 — M C — 14
13

MUXE$_0$ MUXE$_1$ MUXE$_{G-1}$

DÉMULT.

16

SYSTEME DE COMMUTATION MULTISERVICE

BA

UM
UNITÉ DE MARQUAGE

0057628

FIG.2

MODULES DE RACCORDEMENT (FIG.4)

REGIES D'ABONNÉS

LA (1 à K canaux)

RA

RA

LA

(1 à K canaux)

RE

INTERFACES D'ADAPTATION AUX RÉSEAUX EXTERIEURS

LC

LP

LA

LA

LC

LP

LCP

MR₀

BASE DE TEMPS

BT

SYSTEME DE COMMUTATION MULTISERVICE

RÉSEAU DE COMMUTATION

MUXS₀   MUXS₁   MUXS_{G-1}

10

11   14

8 fils   MT   MC

12

13

MUXE₀
MUXE₁

MUXE_{G-1}

16

MR₁

CP

COMMUTATEUR DE PAQUETS

De ou vers réseau de transmission de paquets

LCP

LA

LA

LC

LP

LCP

MR_{G-1}

3   4   5

15

UNITÉ DE MARQUAGE (FIG.15)

0 057 628

# FIG.3

0 057 628

# FIG.4

MODULE DE RACCORDEMENT MR

# FIG.5

CCTS DE MULTIPLEXAGE
ET DE DEMULTIPLEXAGE
D'INFORMATION UTILE
ET D'EXPLOITATION
POUR K CANAUX

# FIG.6

origine de trame → sens de transmission fin de trame

7,8 μs   HORLOGE à 128 KHz

$IU_0$   $IU_1$   $IU_2$   $IU_3$   $IU_4$   $IU_5$   $IU_6$   $IU_7$

$IE_0$   $IE_1$   $IE_2$   $IE_3$   $IE_4$   $IE_5$   $IE_6$   $IE_7$

$3 \xrightarrow{r} 5$   $C_0$   $C_1$   $C_2$   $A_0$   $A_1$   $A_2$   $A_3$   $A_4$

$5 \xrightarrow{e} 3$   $C_0$   $C_1$   $C_2$   $P_0$   $P_1$   $P_2$   $P_3$   $P_4$

1 trame d'information (= 125 μs) sur un canal de liaison 40 de l'interface 4

$IU_i$ : Information utile de rang $i$

$IE_j$ : Information d'exploitation de rang $j$

# FIG.7

| Type de canal de ligne $3 \leftrightarrows 5$ | $IU_0$ | $C_0$ $C_0$ | $IU_1$ | $C_1$ $C_1$ | $IU_2$ | $C_2$ $C_2$ | $IU_3$ | $A_0$ $P_0$ | $IU_4$ | $A_1$ $P_1$ | $IU_5$ | $A_2$ $P_2$ | $IU_6$ | $A_3$ $P_3$ | $IU_7$ | $A_4$ $P_4$ | Remarques |
|---|---|---|---|---|---|---|---|---|---|---|---|---|---|---|---|---|---|
| LA(LC) repos → | 0 | 0 | 0 | 0(1) | 0 | 1 | 0 | 1 | 0 | 1 | 0 | 1 | 0 | 1 | 0 | 1 | Sans alarmes ni |
| mode circuit ← | 0 | 0 | 0 | 0(1) | 0 | 1 | 0 | 1 | 0 | 1 | 0 | 1 | 0 | 1 | 0 | 1 | positionnements |
| LA(LC) active → | X | 0 | X | 0(1) | X | 1 | X | 1 | X | 1 | X | 1 | X | 1 | X | 1 | Sans alarmes ni |
| mode circuit ← | X | 0 | X | 0(1) | X | 1 | X | 1 | X | 1 | X | 1 | X | 1 | X | 1 | pos. |
| LA(LP) repos → | 0 | 1 | 1 | 1(0) | 1 | 1(0) | 1 | 1 | 1 | 1 | 1 | 1 | 1 | 1 | 0 | 1 | Sans alarmes ni |
| mode-paquet ← | 0 | 1 | 1 | 1(0) | 1 | 1(0) | 1 | 1 | 1 | 1 | 1 | 1 | 1 | 1 | 0 | 1 | pos. fanion cadré |
| LA(LP) active → | X | 1 | X | 1(0) | X | 1(0) | X | 1 | X | 1 | X | 1 | X | 1 | X | 1 | Sans alarmes ni |
| mode-paquet ← | X | 1 | X | 1(0) | X | 1(0) | X | 1 | X | 1 | X | 1 | X | 1 | X | 1 | pos. |
| LCP repos → | 0 | 1 | 1 | 0 | 1 | 0 | 1 | 1 | 1 | 1 | 1 | 1 | 1 | 1 | 0 | 1 | Sans alarmes |
| commut. de paquet ← | 0 | 1 | 1 | 0 | 1 | 0 | 1 | 1 | 1 | 1 | 1 | 1 | 1 | 1 | 0 | 1 | fanion cadré |
| LCP active → | X | 1 | X | 0 | X | 0 | X | 1 | X | 1 | X | 1 | X | 1 | X | 1 | Sans alarmes ni |
| commut. de paquet ← | X | 1 | X | 0 | X | 0 | X | 1 | X | 1 | X | 1 | X | 1 | X | 1 | pos. |
| Canal de liaison → | 0 | 0 | 0 | 0 | 0 | 0 | 0 | 0 | 0 | 0 | 0 | 0 | 0 | 0 | 0 | 0 | |
| déconnecté ← | 0 | 0 | 0 | 0 | 0 | 0 | 0 | 1 | 0 | 1 | 0 | 1 | 0 | 1 | 0 | 1 | |

TABLEAU RÉCAPITULATIF DES SIGNAUX POSSIBLES SUR LES CANAUX DE LIAISON 40 DE L'INTERFACE 4

# FIG.8

MULTITRAME : INFORMATIONS DANS $IT_0$

| N° TRAME | N° CANAL LIAISON 40 | REMARQUES | VERS RESEAUX DE COMMUTATION (MUXS) IE DANS $IT_0$ | | | | | | | | VERS RESEAUX DE COMMUTATION (MUXE) IE DANS $IT_0$ | | | | | | | | N° TRAME | N° CANAL LIAISON 40 |
|---|---|---|---|---|---|---|---|---|---|---|---|---|---|---|---|---|---|---|---|---|
| 0 | | Verrouillage multitrame | 0 | 0 | 0 | 0 | 1 | 1 | 1 | 1 | 0 | 0 | 0 | 0 | 1 | 1 | 1 | 1 | 0 | |
| 1 | 1 | LA mode paquet | 1 | 1 | 1 | $A_0$ | $A_1$ | $A_2$ | $A_3$ | $A_4$ | 1 | 1 | 1 | $P_0$ | $P_1$ | $P_2$ | $P_3$ | $P_4$ | 1 | 1 |
| ⋮ | ⋮ | | | | | | | | | | | | | | | | | | ⋮ | ⋮ |
| 5 | 5 | Transition fanion/paquet | 0 | 1 | 0 | 0 | 0 | 1 | 0 | 1 | | | | | | | | | 5 | 5 |
| 6 | 6 | LA mode paquet | 1 | 1 | 1 | $A_0$ | $A_1$ | $A_2$ | $A_3$ | $A_4$ | 1 | 1 | 1 | $P_0$ | $P_1$ | $P_2$ | $P_3$ | $P_4$ | 6 | 6 |
| 7 | 7 | LA mode circuit | 0 | 0 | 1 | $A_0$ | $A_1$ | $A_2$ | $A_3$ | $A_4$ | 0 | 0 | 1 | $P_0$ | $P_1$ | $P_2$ | $P_3$ | $P_4$ | 7 | 7 |
| 8 | 8 | LA mode circuit | 0 | 0 | 1 | $A_0$ | $A_1$ | $A_2$ | $A_3$ | $A_4$ | 0 | 0 | 1 | $P_0$ | $P_1$ | $P_2$ | $P_3$ | $P_4$ | 8 | 8 |
| 9 | 9 | Transition fanion/paquet | 0 | 1 | 0 | 0 | 1 | 0 | 0 | 1 | | | | | | | | | 9 | 9 |
| ⋮ | ⋮ | | | | | | | | | | | | | | | | | | ⋮ | ⋮ |
| 23 | 23 | LC | 0 | 1 | 1 | $A_0$ | $A_1$ | $A_2$ | $A_3$ | $A_4$ | 0 | 1 | 1 | $P_0$ | $P_1$ | $P_2$ | $P_3$ | $P_4$ | 23 | 23 |
| 24 | 24 | LP | 1 | 0 | 0 | $A_0$ | $A_1$ | $A_2$ | $A_3$ | $A_4$ | 1 | 0 | 0 | $P_0$ | $P_1$ | $P_2$ | $P_3$ | $P_4$ | 24 | 24 |
| ⋮ | ⋮ | | | | | | | | | | | | | | | | | | ⋮ | ⋮ |
| 27 | 27 | LCP | 1 | 0 | 1 | $A_0$ | $A_1$ | $A_2$ | $A_3$ | $A_4$ | 1 | 0 | 1 | $P_0$ | $P_1$ | $P_2$ | $P_3$ | $P_4$ | 27 | 27 |
| 28 | 28 | LCP | 1 | 0 | 1 | $A_0$ | $A_1$ | $A_2$ | $A_3$ | $A_4$ | 1 | 0 | 1 | $P_0$ | $P_1$ | $P_2$ | $P_3$ | $P_4$ | 28 | 28 |
| ⋮ | ⋮ | | | | | | | | | | | | | | | | | | ⋮ | ⋮ |
| 30 | 30 | non raccordé | 0 | 0 | 0 | 0 | 0 | 0 | 0 | 0 | 0 | 0 | 0 | 1 | 1 | 1 | 1 | 1 | 30 | 30 |
| 31 | 31 | non raccordé | 0 | 0 | 0 | 0 | 0 | 0 | 0 | 0 | 0 | 0 | 0 | 1 | 1 | 1 | 1 | 1 | | |

0 057 628

ORGANE DE RACCORDEMENT 5

510 de 7

BASE DE TEMPS — 51

FIG.9

FIG.9

52r

520r  521Er

501r

RÉCEPTION 401r à 403r

5031r  521Ur  522Ur

IE
522Er

31 fils

IU

CCT DE MÉMORISATION D'INFORMATION D'EXPLOITATION (Fig. 10) — 53Er

5r

de 7

GÉNÉRATEUR DE VERROUILLAGE — 57r

538Er

54 — CCT DE DÉTECTION DE TRANSITION FANION / PAQUET (Fig. 11)

538Ur  IT0

55

MUXS

5434

IT1 à IT31
autorisation transition

537
retard

CCT DE MÉMORISATION D'INFORMATION UTILE (Fig. 10) — 53Ur

CCT DE DÉTECTION DE MODE DE CANAL (Fig. 14) — 56

52e

520e  521Ee

501e

ÉMISSION 401e à 403e

5031e  521Ue

IE
538Ee

31 fils

IU
538Ue

CCT DE MÉMORISATION D'INFORMATION D'EXPLOITATION (Fig. 13) — 53Ee

5e

CCT DE MÉMORISATION D'INFORMATION UTILE (Fig. 13) — 53Ue

IT0 à IT31
MUXE

CCT DE DÉTECTION DE VERROUILLAGE — 57e

vers 7

0 057 628

# FIG.10

de $520_{r(e)}$ (FIG.9)

écriture 7,8µs

lecture ω

| 31 30 | 2 1 0 |
|---|---|

REGISTRE A DECALAGE (32 bits)

$521\,U_r\,(E_r)$

$522\,U_r\,(E_r)$

Vers 541 (FIG.11)

8kHz

$534\,U_r\,(E_r)$

COMPTEUR D'ECRITURE

$\overline{IT_1}$ à $\overline{IT_{31}}$

2 fils

537

de 562 R (FIG.14)

CCT DE RETARD EN LECTURE (ADDITIONNEUR A2)

2 fils

$535\,U_r\,(E_r)$

$536\,U_r\,(E_r)$

MULTIPLEXEUR

$530\,U_r\,(E_r)$

Ecriture
IU(IE)

lecture
IT

$a_8, a_9$

$\overline{\omega}IT_1$ à $\overline{\omega}IT_{31}$

$531\,U_r\,(E_r)$

COMPTEUR D'ECRITURE

8 fils

$\overline{\omega}IT_1$ à $\overline{\omega}IT_{31}\,(\overline{\omega}IT_0)$

$533\,U_r\,(E_r)$

MULTIPLEXEUR

$a_0$ à $a_7$

COMPTEUR DE LECTURE

8 fils

$532\,U_r\,(E_r)$

CIRCUIT DE MEMORISATION D'INFORMATION UTILE $53\,U_r$ (D'EXPLOITATION $53\,E_r$)

MEMOIRE D'INFORMATION UTILE (D'EXPLOITATION)

0 1 2 3 4 5 6 7

31 30

$SM_0$

$SM_1$

$SM_2$

$SM_3$

$538\,U_r\,(E_r)$

$IT_1$ à $IT_{31}\,(IT_0)$

0 057 628

# FIG.11

$\omega IT_1$ à $\omega IT_{31}$

COMPTEUR ECRITURE LECTURE — 546

547

MEMOIRE D'ETATS RAM — 542

545

5 fils

544

541

IU

540

CALCULATEUR (FIG.12)

522$U_r$

bit de transition

lecture — 5414

CIRCUIT DE DETECTION DE TRANSITION FANION/PAQUET

54

5430 — MEMOIRE CODE TRANSITION 010

adresse canal

5431 — 543

$\omega_1$

lecture

5432

5433

Vers 55 (FIG.9)

$IT_0$

5434

de 562T (FIG.14)

5435

5436

538$E_r$ — $IE(C_0$ à $C_2$, $A_0$ à $A_4)$

de 530$E_r$ (FIG.10)

# FIG.12

1 CELLULE MEMOIRE D'ETATS

RAZ — 5451

544

542

545

540

5410

522$U_r$

ADDITIONNEUR

541

bit de détection de fanion

5412

5413

COMPARATEUR. A6

5411

# FIG.13

CIRCUIT DE MEMORISATION
D'INFORMATION UTILE $53U_e$
(D'EXPLOITATION $53E_e$)

$8kHz$

$534U_e(E_e)$

COMPTEUR
D'ECRITURE

2 fils

$\overline{8kHz}$

$535U_e(E_e)$

ADDITIONNEUR A2
DE LECTURE

2 fils

$536Ue(E_e)$

MULTIPLEXEUR

$a_8, a_9$

$\overline{\omega IT_1}$ à $\overline{\omega IT_{31}}(\omega IT_0)$

$531U_e(E_e)$

COMPTEUR
D'ECRITURE

8 fils

$\overline{\omega IT_1}$ à $\overline{\omega IT_{31}}(\overline{\omega IT_0})$

$a_0$ à $a_7$

MULTIPLEXEUR

$533U_e(E_e)$

COMPTEUR
DE LECTURE

8 fils

$532U_e(E_e)$

Lecture
IU (IE)

écriture
IT

MUXE

$530U_e(E_e)$

0 1 2    7

$sm_1$

29
30  31
0
1

29
30  31
0
1

$sm_2$

30
31
0
1

$sm_3$

30
31

Vers $520_e$ (FIG.9)

lecture 7,8µs

0 1 2                    30 31

REGISTRE A DECALAGE (32 bits)

écriture ω

$521U_e$

$538U_e(E_e)$

$31IU_0$ à $31IU_7$

$(31IE_0$ à $31IE_7)$

# FIG.14

écriture $\omega IT_0$
lecture

| $C_0$ | $C_1$ | $C_2$ | $P_0$ | $P_1$ | $P_2$ | $P_3$ | $P_4$ | MUXE

560

CCT DE DÉTECTION
DE MODE DE CANAL 56

561

CCT DE DÉCODAGE

| MODE | CODE $C_0$ | RETARD | AUTORIS. |
|---|---|---|---|
| CIRCUIT | 0 | 0 | 0 |
| PAQUET | 1 | 1 | 1 |

563R

562R

MÉMOIRE
DES MOTS
DE RETARD
(250 OU 375 µs)

537
vers 535Ur
(Fig.10)

563T

562T

MÉMOIRE
DES MOTS
D'AUTORISATION
DE TRANSITION

5434
vers 543
(Fig.11)

MULTIPLEXEUR — 566R

564R    565R

MULTIPLEXEUR — 566T

564T    565T

| COMPTEUR D'ÉCRITURE | COMPTEUR DE LECTURE | COMPTEUR D'ÉCRITURE | COMPTEUR DE LECTURE |

$IT_0$    $IT_0$    $IT_0$    $\omega IT_1$ à $\omega IT_{31}$

# FIG.15

UNITE DE MARQUAGE
$\frac{15}{7}$

11(FIG.2)

155 COMPTEUR 0 à G-1

154 COMPTEUR D'HEURE

156

157 DETECTEUR 010

$IT_0$

écriture

152 MICRO-PROCESSEUR

151 UNITE LOGIQUE DE COMMANDE

Vers 14(FIG.2)

158 adresse MEMOIRE DE TRANSITIONS

150 MEMOIRE D'OCCUPATION

lecture

15 fils

153

10 fils    16 fils    16 fils    16 fils